# EUROPÄISCHE PATENTANMELDUNG

(11) **EP 1 792 673 A2**
(43) Veröffentlichungstag der Anmeldung: **06.06.2007**
(21) Anmeldenummer: 06024472.0
(22) Anmeldetag: 25.11.2006
(51) Int. Cl.: B21J 15/14, B23B 39/04, B23Q 9/00, B62D 55/265, B62D 57/024, B62D 55/08, B66F 19/00

(54) **Bearbeitungsvorrichtung**

(30) Priorität: 02.12.2005 DE 102005058493
(71) Anmelder: Dürr Special Material Handling GmbH, 79639 Grenzach-Wyhlen (DE)
(72) Erfinder: Rieder, Harry, 79618 Rheinfelden (DE); Nettsträtter, Heinz Jürgen, 44534 Lünen (DE); Mausser, Karl, 79639 Grenzach-Wyhlen (DE)
(74) Vertreter: Hoeger, Stellrecht & Partner Patentanwälte

(57) **Zusammenfassung**

Um eine Bearbeitungsvorrichtung zur Bearbeitung eines Werkstücks zu schaffen, welche flexibel einsetzbar ist und dennoch eine hohe Positioniergenauigkeit und eine hohe Bearbeitungsqualität ermöglicht, wird vorgeschlagen, dass die Bearbeitungsvorrichtung (100) mindestens eine Bearbeitungseinheit (140), mindestens eine Haltevorrichtung (146,210), mittels welcher die Bearbeitungsvorrichtung (100) in einer Bearbeitungsposition an einer Oberfläche des Werkstücks gehalten ist, und mindestens eine Bewegungsvorrichtung (146,214), mittels welcher die Bearbeitungsvorrichtung (100) längs einer Oberfläche des Werkstücks bewegbar ist, umfasst.

## Beschreibung

Die vorliegende Erfindung betrifft eine Bearbeitungsvorrichtung zur Bearbeitung eines Werkstücks. Solche Bearbeitungsvorrichtungen können insbesondere als Bohr- und/oder Nietautomaten ausgebildet sein.

Die bislang bekannten Bohr- und/oder Nietautomaten bestehen aus großen und schweren Grundkonstruktionen mit Führungseinheiten, die selbständig stehen oder auf massive Stahlbauten aufgebaut sind. Solche großen Bohr- und/oder Nietautomaten sind stationär und an einen Einsatzort fest gebunden. Ein flexibler Einsatz solcher Bohr- und/oder Nietautomaten ist nicht möglich. Solche Bohr- und/oder Nietautomaten erfordern ein aufwendiges und daher kostenintensives Fundament, wirken sich durch den großen Raumbedarf nachteilig auf die Fabrikplanung aus und bedeuten einen hohen Investitionsaufwand.

Bislang bekannte kleinere Bohr- und/oder Nieteinheiten haben den Nachteil, dass sie an einer Bühne oder einem Gerüst angeordnet werden müssen, wodurch diese Bohr- und/oder Nieteinheiten der Bewegung der Bühne bzw. des Gerüstes unterworfen sind, was sich nachteilig auf die Positioniergenauigkeit und die Bearbeitungsqualität auswirkt.

Solche Bewegungen im Stahlgerüst der Bühne werden beispielsweise durch Temperatureinflüsse, durch Bühnenbegehungen und durch Bearbeitungsvorgänge mittels anderer Bearbeitungseinheiten hervorgerufen.

Der vorliegenden Erfindung liegt die Aufgabe zugrunde, eine Bearbeitungsvorrichtung zur Bearbeitung eines Werkstücks zu schaffen, welche flexibel einsetzbar ist und dennoch eine hohe Positioniergenauigkeit und eine hohe Bearbeitungsqualität ermöglicht.

Diese Aufgabe wird erfindungsgemäß durch eine Bearbeitungsvorrichtung zur Bearbeitung eines Werkstücks gelöst, die mindestens eine Bearbeitungseinheit, mindestens eine Haltevorrichtung, mittels welcher die Bearbeitungsvorrichtung in einer Bearbeitungsposition an einer Oberfläche des Werkstückes gehalten ist, und mindestens eine Bewegungsvorrichtung, mittels welcher die Bearbeitungsvorrichtung längs einer Oberfläche des Werkstücks bewegbar ist, umfasst.

Der erfindungsgemäßen Lösung liegt somit das Konzept zugrunde, die Bearbeitungseinheit nicht an einer separaten Stützkonstruktion oder an einer Arbeitsbühne oder an einem Arbeitsgerüst anzuordnen, sondern für den Bearbeitungsvorgang direkt an einer Oberfläche des Werkstücks selbst zu fixieren.

Auf diese Weise wird die Bearbeitungsvorrichtung von Bewegungen im Bühnenstahlbau entkoppelt, was sich positiv auf die Positioniergenauigkeit und die Bearbeitungsqualität auswirkt.

Ferner benötigt die erfindungsgemäße Bearbeitungsvorrichtung kein aufwendiges Fundament, sondern kann in besonders leichter Bauweise ausgeführt werden.

Eine besonders effiziente Arbeitsweise der Bearbeitungsvorrichtung wird dadurch ermöglicht, dass die Bearbeitungsvorrichtung mindestens eine Bewegungsvorrichtung umfasst, mittels welcher die Bearbeitungsvorrichtung längs einer Oberfläche des Werkstücks bewegbar ist.

Auf diese Weise kann sich die Bearbeitungsvorrichtung selbsttätig von einer ersten Bearbeitungsposition in eine zweite Bearbeitungsposition bewegen, ohne dass die Bearbeitungsvorrichtung hierzu von der Oberfläche des Werkstücks abgehoben und an anderer Stelle auf die Oberfläche des Werkstücks wieder aufgesetzt werden muss.

Die erfindungsgemäße Bearbeitungsvorrichtung ist mobil, nicht an einen bestimmten Montageplatz gebunden und flexibel einsetzbar.

Dadurch verringern sich insbesondere auch die Investitionskosten für die erfindungsgemäße Bearbeitungsvorrichtung.

Die Haltevorrichtung, mittels welcher die Bearbeitungsvorrichtung in einer Bearbeitungsposition an einer Oberfläche des Werkstücks gehalten ist, kann beispielsweise mindestens eine evakuierbare Kammer umfassen. Nach Evakuierung der Kammer wird dann zumindest ein Teil der Haltevorrichtung aufgrund des Luftdrucks in der Umgebung der Haltevorrichtung gegen die Oberfläche des Werkstücks gepresst.

Ferner kann vorgesehen sein, dass die Haltevorrichtung mindestens einen Saugnapf umfasst.

Alternativ oder ergänzend hierzu kann auch vorgesehen sein, dass die Haltevorrichtung mindestens einen Dauermagneten und/oder einen Elektromagneten, eine Greifvorrichtung zum Angreifen an einem Bestandteil des Werkstücks und/oder eine Klemmvorrichtung zum Festklemmen an einem Teil des zu bearbeitenden Werkstücks umfasst.

Vorzugsweise ist der Kontakt zwischen der Haltevorrichtung der Bearbeitungsvorrichtung und der Oberfläche des Werkstücks lösbar, damit die Bearbeitungsvorrichtung nach Abschluss eines Bearbeitungsvorgangs in eine neue Bearbeitungsposition relativ zu der Oberfläche des Werkstücks gebracht werden kann.

Die Haltevorrichtung kann ferner mindestens ein lineares Halteelement umfassen.

Ein solches lineares Halteelement kann beispielsweise als ein Gurt, ein Seil, ein Riemen oder eine Kette ausgebildet sein.

Die Bewegungsvorrichtung der Bearbeitungsvorrichtung kann beispielsweise als ein Krabbelroboter oder ein Laufroboter oder als eine Klettervorrichtung ausgebildet sein.

Ferner kann vorgesehen sein, dass die Bearbeitungsvorrichtung auf mindestens einer Schiene oder längs einer Rollenbahn oder einer Kettenbahn verfahren wird.

Ferner kann die Bewegung der Bearbeitungsvorrichtung längs der Oberfläche des Werkstücks mittels eines Zahnriemens oder einer Kette erfolgen.

Die Bewegungen der Bearbeitungsvorrichtung relativ zu dem bearbeitenden Werkstück können alle denkbaren Bewegungsrichtungen umfassen, insbesondere Bewegungen in allen zur Oberfläche des Werkstücks parallelen Richtungen, Bewegungen in senkrecht zur Oberfläche des Werkstücks verlaufenden Richtungen (d.h. Aufwärts- und Abwärtsbewegungen), Diagonalbewegungen, Vorwärts- und Rückwärtsbewegungen sowie Drehbewegungen auf der Oberfläche des Werkstücks.

Ferner kann vorgesehen sein, dass die Bewegungsvorrichtung so ausgebildet ist, dass die Bearbeitungsvorrichtung mittels der Bewegungsvorrichtung von einer Innenseite des Werkstücks zu einer Außenseite des Werkstücks oder umgekehrt, von einer Außenseite des Werkstücks zu einer Innenseite des Werkstücks, wechseln kann.

Der Antrieb der Bewegungsvorrichtung der Bearbeitungsvorrichtung kann grundsätzlich in jeder beliebigen Weise angetrieben sein, beispielsweise elektromechanisch, pneumatisch oder hydraulisch.

Auch ein manueller Antrieb der Bearbeitungsvorrichtung, beispielsweise mittels einer Handkurbel, ist denkbar.

Bei einer bevorzugten Ausgestaltung der Erfindung ist vorgesehen, dass die Bewegungsvorrichtung mindestens einen Raupenantrieb umfasst.

Insbesondere kann vorgesehen sein, dass die Bearbeitungsvorrichtung mindestens zwei Raupen umfasst, welche quer, vorzugsweise im wesentlichen senkrecht, zueinander ausgerichtet sind. Auf diese Weise kann die Bewegungsrichtung der Bearbeitungsvorrichtung rasch um beispielsweise 90° gedreht werden, indem zuerst eine der mindestens zwei Raupen und dann die senkrecht zu der ersten Raupe ausgerichtete zweite Raupe zum Fortbewegen der Bearbeitungsvorrichtung betätigt wird.

Um die Bearbeitungsvorrichtung während der Bewegung längs der Oberfläche des Werkstücks an der Werkstückoberfläche zu halten, kann vorgesehen sein, dass der Raupenantrieb eine Vorrichtung zum Evakuieren eines Zwischenraums zwischen einem Raupengurt und einer Oberfläche des Werkstücks umfasst. Auf diese Weise kann der Raupengurt an die Werkstückoberfläche angesaugt werden.

Um den Raupenantrieb an gekrümmte Bereiche der Werkstückoberfläche anpassen zu können, ist vorzugsweise vorgesehen, dass der Raupenantrieb mindestens eine Einrichtung zum Anlegen mindestens eines Raupengurtes an eine Oberfläche des Werkstücks umfasst.

Alternativ oder ergänzend zu einem Raupenantrieb kann auch vorgesehen sein, dass die Bearbeitungsvorrichtung mindestens eine Schreiteinheit umfasst.

Um die Bewegungsrichtung der Bearbeitungsvorrichtung rasch wechseln zu können, kann die Bewegungsvorrichtung insbesondere mindestens zwei Schreiteinheiten zum Schreiten in zwei quer, vorzugsweise im wesentlichen senkrecht, zueinander verlaufenden Richtungen umfassen.

Eine solche Schreiteinheit kann mindestens ein relativ zu einem Grundkörper der Bearbeitungsvorrichtung bewegliches Stützelement umfassen.

Um die Bearbeitungsvorrichtung mittels eines solchen Stützelements an der Werkstückoberfläche halten zu können, ist es günstig, wenn das Stützelement mindestens eine Fixiervorrichtung zum Fixieren des Stützelements an einer Oberfläche des Werkstücks umfasst.

Bei einer bevorzugten Ausgestaltung der Erfindung ist vorgesehen, dass die Fixiervorrichtung mindestens eine in Kontakt mit der Oberfläche des Werkstücks bringbare und von der Oberfläche des Werkstücks lösbare Stützschale umfasst.

Alternativ oder ergänzend zu den vorstehend genannten Ausgestaltungen der Bewegungsvorrichtung kann vorgesehen sein, dass die Bewegungsvorrichtung mindestens einen Schwenkfuß umfasst.

Um die Bearbeitungsvorrichtung während der Fortbewegung längs der Werkstückoberfläche an dem Werkstück halten zu können, kann dabei insbesondere vorgesehen sein, dass der Schwenkfuß mindestens eine Fixiervorrichtung zum Fixieren des Schwenkfußes an einer Oberfläche des Werkstücks umfasst.

Eine solche Fixiervorrichtung kann mindestens eine in Kontakt mit der Oberfläche des Werkstücks bringbare und von der Oberfläche des Werkstücks lösbare Stützschale umfassen.

Bei einer bevorzugten Ausgestaltung der Erfindung ist vorgesehen, dass der Schwenkfuß über ein längenveränderliches Element schwenkbar mit einem Grundkörper der Bearbeitungsvorrichtung verbunden ist.

Insbesondere kann vorgesehen sein, dass der Schwenkfuß ein erstes Element aufweist, das schwenkbar an einem Grundkörper der Bearbeitungsvorrichtung gehalten ist, und ein zweites Element, das schwenkbar an dem ersten Element gehalten ist.

Alternativ oder ergänzend zu den vorstehend beschriebenen Ausgestaltungen der Bewegungsvorrichtung kann auch vorgesehen sein, dass die Bewegungsvorrichtung mindestens ein an einer Oberfläche des Werkstücks abrollendes Rad umfasst.

Ferner kann die Bewegungsvorrichtung mindestens eine Aufwickelvorrichtung und/oder mindestens eine Abwickelvorrichtung für ein lineares Zugelement umfassen.

Alternativ oder ergänzend hierzu kann vorgesehen sein, dass die Bewegungsvorrichtung mindestens eine Antriebsrolle aufweist, die längs eines linearen Zugelements abrollt.

Das lineare Zugelement kann beispielsweise als ein Gurt, ein Seil, ein Riemen, ein Zahnriemen oder eine Kette ausgebildet sein.

Um die Bearbeitungseinheit der Bearbeitungsvorrichtung in verschiedene Arbeitspositionen relativ zu dem Werkstück bringen zu können, ohne dabei jedesmal die Bearbeitungsvorrichtung als Ganzes bewegen zu müssen, ist es günstig, wenn die Bearbeitungsvorrichtung einen Grundkörper umfasst und die Bearbeitungseinheit längs mindestens einer Achse, vorzugsweise längs mindestens zweier Achsen, insbesondere längs mindestens dreier Achsen, relativ zu dem Grundkörper verschiebbar ist.

Aus demselben Grund ist es günstig, wenn die Bearbeitungsvorrichtung einen Grundkörper umfasst und die Bearbeitungseinheit um mindestens eine Schwenkachse, vorzugsweise um mindestens zwei Schwenkachsen, relativ zu dem Grundkörper verschwenkbar ist.

Um die Bearbeitungseinheit relativ zu einem Grundkörper der Bearbeitungsvorrichtung bewegen zu können, kann auch vorgesehen sein, dass die Bearbeitungsvorrichtung einen Knickarmroboter und/oder einen Portalroboter umfasst, an dem die Bearbeitungseinheit gehalten ist.

Grundsätzlich kommen für die Bearbeitungseinheit der Bearbeitungsvorrichtung alle denkbaren Arbeitsinhalte in Betracht.

Insbesondere kann vorgesehen sein, dass die Bearbeitungseinheit zum Bohren, Nieten, Senken, zur Zufuhr von Dichtmittel, zum Nietstecken, zum Nietsetzen, zum Absaugen eines Mediums und/oder zur Zufuhr von Kühlmittel zu dem Werkstück ausgebildet ist.

Bei einer bevorzugten Ausgestaltung der erfindungsgemäßen Bearbeitungsvorrichtung ist vorgesehen, dass die Bearbeitungseinheit ein Bohrgerät und/oder ein Nietgerät umfasst.

Um den mittels der Bearbeitungsvorrichtung durchgeführten Bearbeitungsprozess zu überwachen, kann vorgesehen sein, dass die Bearbeitungsvorrichtung mindestens einen Sensor zur Vibrationskontrolle und/oder mindestens einen Sensor zur Kontrolle der Oberflächenqualität umfasst.

Ferner kann vorgesehen sein, dass Standzeiten, Betriebszeiten und Prozessdaten der Bearbeitungsvorrichtung (beispielsweise eine Drehzahl, ein Vorschub, ein Anpressdruck und/oder eine Temperatur, welche jeweils mittels eines geeigneten Sensors ermittelt werden) erfasst, in einer Steuereinheit der Bearbeitungsvorrichtung gespeichert und/oder an einen externen Leitrechner übermittelt werden.

Zur Orientierung der Bearbeitungsvorrichtung an dem zu bearbeitenden Werkstück können an dem Werkstück angebrachte Markierungen, Bohrungen, Referenzbohrungen und/oder andere Bauteilmerkmale, beispielsweise Werkstückkanten, dienen.

Die vorstehend genannten Referenzmarken können beispielsweise mittels eines Bilderfassungssystems und einer damit gekoppelten Bilderkennungsvorrichtung erfasst und für die Positionsbestimmung der Bearbeitungsvorrichtung verwendet werden.

Die Bearbeitungsvorrichtung kann mindestens einen Sensor zum Erkennen der Position der Bearbeitungsvorrichtung relativ zu dem Werkstück umfassen.

Ferner kann die Bearbeitungsvorrichtung mindestens einen Sensor zum Erkennen der Winkellage der Bearbeitungsvorrichtung umfassen.

Der mindestens eine Sensor zum Erkennen der Position der Bearbeitungsvorrichtung relativ zu dem Werkstück kann beispielsweise einen Laser, einen Lichttaster, ein induktives Sensorelement, ein kapazitives Sensorelement und/oder eine Bildkamera umfassen.

Die für die Fortbewegung der Bearbeitungsvorrichtung längs der Werkstückoberfläche benötigte Energie und/oder die für die Durchführung des Bearbeitungsvorgangs an dem Werkstück erforderliche Energie kann berührungslos, beispielsweise mittels induktiver Energieübertragung, oder mittels eines Kabels von einer externen Energiequelle zu der Bearbeitungsvorrichtung übertragen werden.

Alternativ oder ergänzend hierzu kann auch vorgesehen sein, dass die Bearbeitungsvorrichtung mit einem Energiespeicher, insbesondere mit einem Akku, versehen ist.

Die Übertragung von Daten zwischen der Bearbeitungsvorrichtung und einem externen Leitrechner kann beispielsweise über ein Kabel, mittels optischer Datenübertragung und/oder mittels Funkdatenübertragung erfolgen.

Die erfindungsgemäße Bearbeitungsvorrichtung kann an beliebig komplex geformten Werkstückoberflächen, insbesondere an ebenen Flächen, zylindrischen Flächen, Kugelflächen, konischen Flächen oder an Kombinationen solcher Flächen oder an beliebig geformten Freiformflächen eines Werkstücks angeordnet werden.

Das zu bearbeitende Werkstück kann aus einem beliebigen Werkstoff gebildet sein, und die Werkstückoberfläche kann eine beliebige Rauhigkeit aufweisen.

Die erfindungsgemäße Bearbeitungsvorrichtung eignet sich zur Durchführung von Bearbeitungsvorgängen an Werkstücken von Luft- und Raumfahrzeugen aller Art, im Schiffsbau, im Waggonbau (in der Bahnindustrie), im Behälterbau, in der Montage von Kesseln und Tanks, im Rohrleitungsbau und/oder im Chemieanlagenbau.

Insbesondere im Luft- und Raumfahrzeugbau kann die erfindungsgemäße Bearbeitungsvorrichtung mit Gewinn zur Durchführung automatischer Bohr- und Nietprozesse an Längsnähten, Quernähten und/oder Ringnähten von Bauteilen eingesetzt werden.

Die Bearbeitungsvorrichtung kann dabei beispielsweise direkt auf den Rumpf eines Luft- oder Raumfahrzeugs aufgesetzt werden und sich im Laufe des Bearbeitungsvorgangs längs des Rumpfes bewegen, ohne von dem Rumpf abgenommen werden zu müssen.

Die erfindungsgemäße Bearbeitungsvorrichtung kann auch unter schwierigen Umgebungsbedingungen, beispielsweise in großer Hitze oder Kälte, bei Anwesenheit von giftigen oder heißen Dämpfen, in chemisch aggressiver Atmosphäre, bei Nässe, bei Trockenheit, bei hohem Staubgehalt oder auch in großen Höhen eingesetzt werden.

Mittels der erfindungsgemäßen Bearbeitungsvorrichtung können insbesondere in der Fertigung von Luft- und Raumfahrzeugen kürzere Durchlaufzeiten erzielt werden, da die bislang im Einsatz befindlichen großen und schweren Bohr- und Nietautomaten meistens ein Takten der Bauteile erfordern, was längere Durchlaufzeiten zur Folge hat.

Die erfindungsgemäße Bearbeitungsvorrichtung ist universell einsetzbar. Sie wird entsprechend den jeweils gestellten Anforderungen ausgerüstet, kann sich selbständig entlang der Oberfläche des Werkstücks fortbewegen oder wird manuell umgesetzt.

Durch Messen des Abstands von vorgegebenen Referenzpunkten und/oder durch Erkennen von Markierungen in ihrer Umgebung findet sie selbständig ihre Arbeitsposition an dem zu bearbeitenden Werkstück.

Weitere Merkmale und Vorteile der Erfindung sind Gegenstand der nachfolgenden Beschreibung und der zeichnerischen Darstellung von Ausführungsbeispielen.

### In den Zeichnungen zeigen:

- Fig. 1: eine schematische perspektivische Darstellung einer ersten Ausführungsform einer Bearbeitungsvorrichtung, die eine Bewegungsvorrichtung mit einem Raupenantrieb umfasst;
- Fig. 2: eine vergrößerte schematische perspektivische Darstellung eines Raupenantriebs der Bearbeitungsvorrichtung aus Fig. 1;
- Fig. 3: eine schematische perspektivische Darstellung eines Grundkörpers und einer verschiebbar und schwenkbar an dem Grundkörper gehaltenen Bearbeitungseinheit der Bearbeitungsvorrichtung;
- Fig. 4: eine schematische Übersichtsdarstellung einer Steuerung der Bearbeitungsvorrichtung;
- Fig. 5: eine schematische perspektivische Darstellung einer zweiten Ausführungsform einer Bearbeitungsvorrichtung, die eine Bewegungseinrichtung mit zwei Schreiteinheiten umfasst;
- Fig. 6 bis 11: eine schematische Seitenansicht der Bearbeitungsvorrichtung aus Fig. 5 in mehreren aufeinanderfolgenden Phasen eines Schreitvorgangs;
- Fig. 12: eine schematische perspektivische Darstellung einer dritten Ausführungsform einer Bearbeitungsvorrichtung, die eine Bewegungseinrichtung mit Schwenkfüßen, welche jeweils über ein längenveränderliches Element mit einem Grundkörper der Bearbeitungsvorrichtung verbunden sind, umfasst;
- Fig. 13 bis 20: schematische perspektivische Darstellungen der Bearbeitungsvorrichtung aus Fig. 12 während mehrerer aufeinanderfolgender Phasen eines Bewegungsvorgangs;
- Fig. 21: eine schematische perspektivische Darstellung einer vierten Ausführungsform einer Bearbeitungsvorrichtung, die eine Bewegungseinrichtung mit Schwenkfüßen, welche jeweils über zwei Gelenke mit einem Grundkörper der Bearbeitungsvorrichtung verbunden sind, umfasst;
- Fig. 22: eine schematische perspektivische Darstellung einer fünften Ausführungsform einer Bearbeitungsvorrichtung, die eine Bewegungseinrichtung mit Aufwickel- und Abwickelvorrichtungen für lineare Zugelemente umfasst;
- Fig. 23: eine schematische Seitenansicht einer als Knickarmroboter ausgebildeten Bearbeitungseinheit; und
- Fig. 24: eine schematische Draufsicht von oben auf den Sockel einer als Knickarmroboter ausgebildeten Bearbeitungseinheit.

Gleiche oder funktional äquivalente Elemente sind in allen Figuren mit denselben Bezugszeichen bezeichnet.

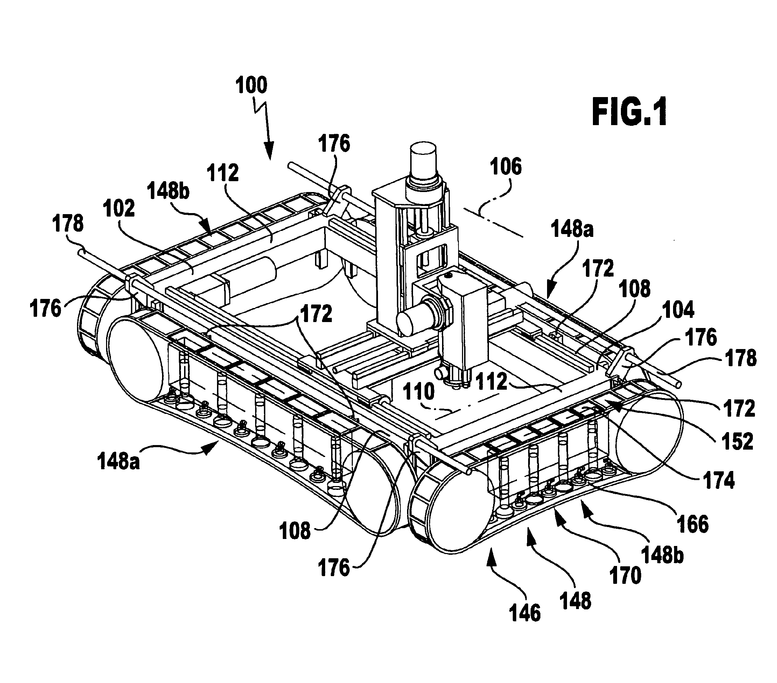

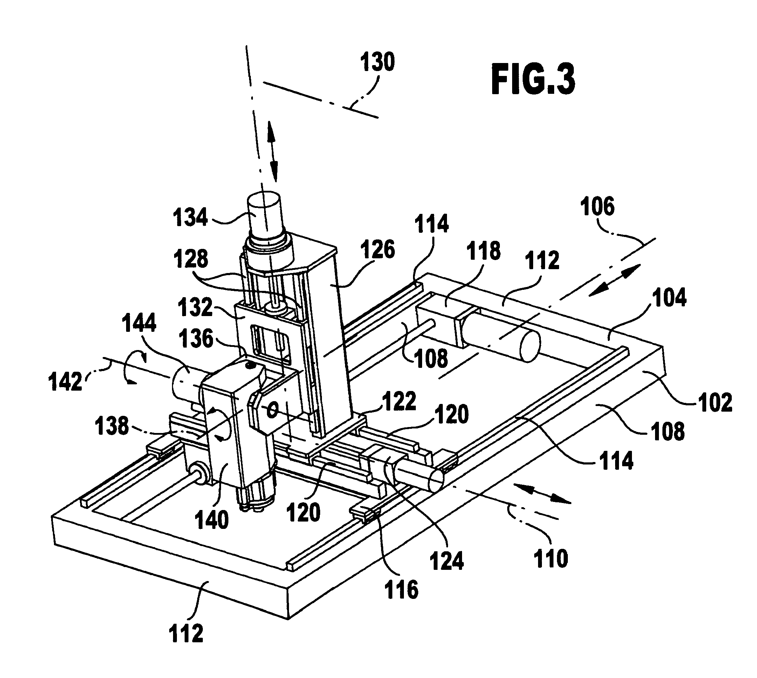

Eine in den Fig. 1 bis 4 dargestellte, als Ganzes mit 100 bezeichnete erste Ausführungsform einer Bearbeitungsvorrichtung umfasst einen Grundkörper 102 (siehe insbesondere Fig. 3) in Form eines im wesentlichen rechteckigen Grundrahmens 104, der aus zwei sich längs einer X-Achse 106 erstreckenden Längsträgern 108 und aus zwei sich längs einer senkrecht zur X-Achse 106 gerichteten Y-Richtung 110 erstreckenden Querträgern 112 zusammengesetzt ist.

Die Längsträger 108 tragen jeweils eine Führungsschiene 114, und an den beiden Führungsschienen 114 ist ein X-Schlitten 116 in der Richtung der X-Achse 106 verschiebbar geführt.

Der X-Schlitten 116 ist zu einer Verschiebung längs der X-Achse 106 mittels eines X-Achsen-Antriebs 118 antreibbar.

Der X-Schlitten 116 trägt ein Paar von Führungsschienen 120, an denen ein Y-Schlitten 122 längs der Y-Richtung 110 verschiebbar geführt ist.

Der Y-Schlitten 122 ist mittels eines Y-Achsen-Antriebs 124 zu einer Verschiebung längs der Y-Achse 110 antreibbar.

Der Y-Schlitten 122 trägt einen Portalroboter 125 mit einem Aufbau 126, an dem ein Paar von Führungsschienen 128 gehalten ist, welche sich längs einer Z-Achse 130 erstrecken, die senkrecht zu der X-Achse 106 und senkrecht zu der Y-Achse 110 ausgerichtet ist.

Ein Z-Schlitten 132 ist an den Führungsschienen 128 längs der Z-Achse 130 verschiebbar geführt.

Der Z-Schlitten 132 ist mittels eines Z-Achsen-Antriebs 134 zu einer Verschiebung längs der Z-Achse 130 antreibbar.

Der Z-Schlitten 132 trägt eine Schwenkhalterung 136, welche um eine A-Schwenkachse 138 schwenkbar an dem Z-Schlitten 132 gehalten ist.

Die A-Schwenkachse 138 verläuft beispielsweise im wesentlichen parallel zur X-Achse 106.

Die Schwenkhalterung 136 ist durch einen (nicht dargestellten) A-Schwenkantrieb zu einer Schwenkbewegung um die A-Schwenkachse 138 antreibbar.

An der Schwenkhalterung 136 ist eine Bearbeitungseinheit 140 um eine B-Schwenkachse 142 schwenkbar gehalten.

Die B-Schwenkachse 142 ist im wesentlichen senkrecht zur A-Schwenkachse 138 ausgerichtet.

Die Bearbeitungseinheit 140 ist mittels eines B-Schwenkantriebs 144 zu einer Schwenkbewegung um die B-Schwenkachse 142 antreibbar.

Mittels des X-Achsen-Antriebs 118, des Y-Achsen-Antriebs 124, des Z-Achsen-Antriebs 134, des A-Schwenkantriebs 138 und des B-Schwenkantriebs 144 ist somit die Bearbeitungseinheit 140 längs dreier linearer Achsen (X-Achse 106, Y-Achse 110, Z-Achse 130) relativ zu dem Grundkörper 102 verschiebbar und um zwei Schwenkachsen (A-Schwenkachse 138, B-Schwenkachse 142) relativ zu dem Grundkörper 102 schwenkbar.

Die Antriebe für die Verschiebebewegungen bzw. für die Schwenkbewegungen können dabei beispielsweise elektromechanische, pneumatische oder hydraulische Antriebe sein.

Die Bearbeitungseinheit 140 ist mit einer oder mehreren Vorrichtungen versehen, welche dafür erforderlich sind, den oder die Bearbeitungsvorgänge auszuführen, für welche die Bearbeitungsvorrichtung 100 vorgesehen ist.

Beispielsweise kann die Bearbeitungseinheit 140 Vorrichtungen zum Bohren, Nieten, Senken, zum Stecken eines Niets, zum Setzen eines Niets, zur Zufuhr eines Dichtmittels, zur Zufuhr eines Kühlmittels und/oder zum Absaugen eines flüssigen oder gasförmigen Mediums umfassen.

Insbesondere kann die Bearbeitungseinheit 140 als eine Bohr- und/oder Niet-einheit ausgebildet sein.

Vorzugsweise ist die Bearbeitungseinheit 140 modular ausgebildet und so lösbar an der Schwenkhalterung 136 gehalten, dass sie gegen eine andere modulare Bearbeitungseinheit 140 mit anderer Funktion ausgetauscht werden kann.

Ferner ist es möglich, die lösbar an der Schwenkhalterung 136 gehaltene Bearbeitungseinheit 140 für Wartungs- und/oder Reparaturzwecke gegen eine andere Bearbeitungseinheit 140 mit derselben Funktion auszutauschen.

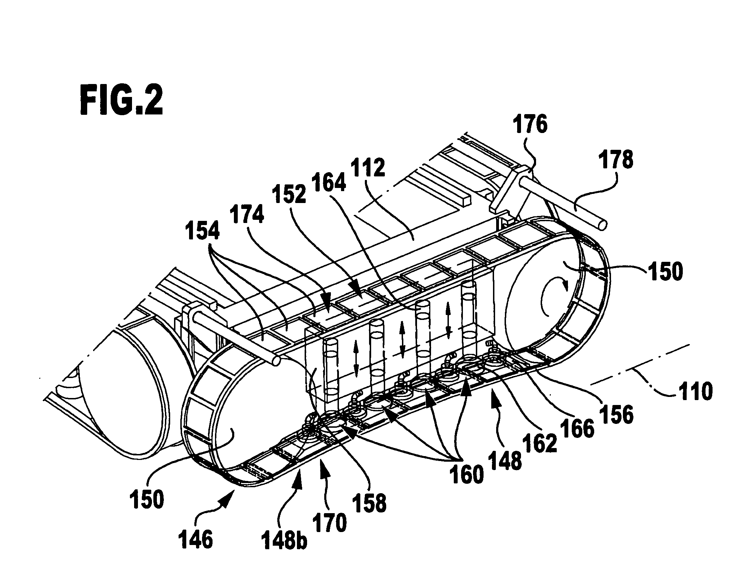

Um die Bearbeitungsvorrichtung 100 an einer Oberfläche eines zu bearbeitenden Werkstücks halten und längs der Oberfläche des Werkstücks bewegen zu können, ist die Bearbeitungsvorrichtung 100 mit einer kombinierten Halte- und Bewegungsvorrichtung 146 versehen, welche vier an dem Grundkörper 102 angeordnete Fahrbalken 148 mit Raupenantrieb umfasst (siehe die Fig. 1 und 2).

Dabei sind zwei Fahrbalken 148a an jeweils einem der Längsträger 108 des Grundrahmens 104 angeordnet und parallel zur X-Achse 106 ausgerichtet, während zwei weitere Fahrbalken 148b an jeweils einem der Querträger 112 des Grundrahmens 104 angeordnet und parallel zur Y-Achse 110 ausgerichtet sind.

Wie am besten aus Fig. 2 zu ersehen ist, umfasst jeder Fahrbalken 148 jeweils zwei Raupenantriebsräder 150, welche mittels (nicht dargestellter) Drehantriebsmotoren zu einer Drehbewegung um eine parallel zur Werkstückoberfläche und senkrecht zur Längsrichtung des betreffenden Fahrbalkens 148 ausgerichtete Drehachse antreibbar sind.

Um die beiden Raupenantriebsräder 150 des Fahrbalkens 148 ist jeweils ein Raupengurt 152 gelegt, welcher längs seines Umfangs ringförmig geschlossen ist und an seiner den Raupenantriebsrädern 150 abgewandten Außenseite eine Vielzahl längs der Umfangsrichtung des Raupengurtes 152 aufeinanderfolgender Vakuumtaschen 154 aufweist.

Der Raupengurt 152 wird mittels der Raupenantriebsräder 150 zu einer Umlaufbewegung um die Raupenantriebsräder 150 angetrieben, wobei das untere Trum 170 des Raupengurts 152 zwischen den unteren Kuppen der Raupenantriebsräder 150 an der Oberfläche des Werkstücks abläuft und dadurch die Bearbeitungsvorrichtung 100 in der Längsrichtung des betreffenden Fahrbalkens 148 (bei dem in Fig. 2 dargestellten Beispiel also in Richtung der Y-Achse 110) längs der Werkstückoberfläche vorwärts bewegt.

Um die Ablauffläche 156 gegen die Werkstückoberfläche drücken und an die jeweilige lokale Oberflächenkrümmung des Werkstücks anpassen zu können, umfasst jeder Fahrbalken 148 eine Anstellvorrichtung 158 mit mehreren, beispielsweise vier, Anstelleinheiten 160 in Form von Anstellkolben 162, die in jeweils einem Anstellzylinder 164 der Anstellvorrichtung 158 im wesentlichen senkrecht zur Ablauffläche 156 des Raupengurts 152 verschiebbar geführt sind.

Mittels einer (beispielsweise pneumatischen) Bewegungseinrichtung kann jeder der Anstellkolben 162 unabhängig von den anderen Anstellkolben 162 der Anstellvorrichtung 158 in eine gewünschte Anstellposition gebracht werden, in welcher der betreffende Anstellkolben 162 einen gewünschten Überstand über den jeweiligen Anstellzylinder 164 aufweist.

Die Unterseiten der Anstellkolben 162 sind mit einer flexiblen Anstellleiste 166 verbunden, welche die Andruckkraft der Anstellkolben 162 auf das untere Trum 170 des Raupengurtes 152 überträgt, um so den Raupengurt 152 gegen die Werkstückoberfläche anzudrücken.

Ist die lokale Werkstückoberfläche im wesentlichen eben, so stehen alle Anstellkolben 162 im wesentlichen gleich weit über den jeweils zugehörigen Anstellzylinder 164 über, und auch die Anstellleiste 166 weist eine im wesentlichen ebene Unterseite auf.

Ist die lokale Werkstückoberfläche gekrümmt (was beispielsweise durch geeignete mechanische, optische, induktive oder kapazitive Sensoren feststellbar ist), so werden die Anstellkolben 162 unterschiedlich weit nach unten verfahren, so dass die Unterseite der Anstellleiste 166 eine an die Werkstückoberfläche angepasste Krümmung aufweist.

Zugleich mit dem Verfahren der Anstellkolben 162 werden die Raupenantriebsräder 150 so relativ zueinander verschoben, dass der Achsenabstand beider Raupenantriebsräder 150 angepasst wird und im Raupengurt 152 die gewünschte Spannung erhalten bleibt. Diese Relativbewegung der Raupenantriebsräder 150 kann beispielsweise durch einen elektromotorischen Antrieb der Aufhängung mindestens eines der Raupenantriebsräder 150 oder aber durch eine federnde Aufhängung mindestens eines der Raupenantriebsräder 150 erfolgen.

Alternativ oder ergänzend zu einer Relativbewegung der Raupenantriebsräder 150 kann auch vorgesehen sein, dass der Raupengurt 152 eine variable Länge aufweist, beispielsweise dadurch, dass aufeinanderfolgende Vakuumtaschen 154 über längenvariable Kopplungselemente miteinander verbunden sind.

Die Anstellleiste 166 ist ferner mit mehreren, beispielsweise mit fünf, Vakuumanschlüssen 168 versehen, welche an eine (nicht dargestellte) Vakuumpumpe angeschlossen sind, so dass die jeweils unter einem Vakuumanschluss 168 hindurchlaufende Vakuumtasche 154 des Raupengurts 152 durch den betreffenden Vakuumanschluss 168 evakuierbar ist.

Auf diese Weise werden alle Vakuumtaschen 154, die sich im der Werkstückoberfläche zugewandten unteren Trum 170 eines auf die Werkstückoberfläche aufgesetzten Raupengurtes 152 befinden, evakuiert, so dass das Untertrum 170 durch den Luftdruck der Umgebung außerhalb der Vakuumtaschen 154 gegen die Werkstückoberfläche gepresst wird.

Auf diese Weise werden der betreffende Raupengurt 152, die Raupenantriebsräder 150, um welche der Raupengurt 152 umläuft, und der Grundrahmen 104, mit welchem die Raupenantriebsräder 150 über eine Hebevorrichtung 172 verbunden sind, lösbar an der Werkstückoberfläche gehalten.

Zur Fortbewegung der Bearbeitungsvorrichtung 100 längs der Werkstückoberfläche werden jeweils die beiden Fahrbalken 148, welche sich in der gewünschten Bewegungsrichtung, beispielsweise parallel zur X-Achse 106, erstrecken, also beispielsweise die beiden Fahrbalken 148a, auf die Werkstückoberfläche abgesetzt, während die beiden quer zu der gewünschten Fahrtrichtung ausgerichteten Fahrbalken, also beispielsweise die beiden Fahrbalken 148b, durch die Hebevorrichtung 172 von der Werkstückoberfläche abgehoben werden.

Nach dem Absetzen auf die Werkstückoberfläche werden die Fahrbalken 148a in Betrieb genommen, indem die zugehörigen Raupenantriebsräder 150 mittels ihrer (nicht dargestellten) Antriebsmotoren in Drehbewegung versetzt werden, so dass der jeweilige Raupengurt 152 in der gewünschten Richtung an der Werkstückoberfläche abrollt.

Während dieser Abrollbewegung werden die jeweils in der Bewegungsrichtung vorne liegenden Vakuumtaschen 154 des Raupengurts 152 durch die Evakuierung gegen die Werkstückoberfläche angesaugt, während die in der Bewegungsrichtung hinten liegenden Vakuumtaschen 154, die nicht mehr durch einen Vakuumanschluss 168 evakuiert werden, wieder freigegeben werden und in das der Werkstückoberfläche abgewandte obere Trum 174 des Raupengurts 152 gelangen.

Um die Bearbeitungsvorrichtung 100 auch im Falle eines Abfalls oder Verlusts des Vakuums in den an der Werkstückoberfläche anliegenden Vakuumtaschen 154 sicher an der Werkstückoberfläche zu halten, ist der Grundkörper 102 der Bearbeitungsvorrichtung 100 in seinen vier Eckbereichen mit jeweils einer Halteöse 176 versehen, wobei jede Halteöse 176 mit einer Durchtrittsöffnung für ein Sicherungsseil 178 versehen ist und sich jeweils ein Sicherungsseil 178 durch zwei einander zugeordnete Halteösen 176 an dem Grundkörper 102 hindurch erstreckt.

Beispielsweise kann vorgesehen sein, dass sich zwei im wesentlichen parallel zur X-Achse 106 ausgerichtete Sicherungsseile 178 durch jeweils zwei Halteösen 176 hindurch erstrecken.

Die Sicherungsseile 178 sind außerhalb des von der Bearbeitungsvorrichtung 100 zu bearbeitenden Bereichs des Werkstücks an dem Werkstück selbst oder an einer nicht zum Werkstück gehörenden Halterung, beispielsweise an einem Montagegerüst, befestigt.

Bei einem Ausfall des Vakuums in den Vakuumtaschen 154 fällt daher die Bearbeitungsvorrichtung 100 nicht von dem Werkstück herunter, sondern wird von den Sicherungsseilen 178 gehalten.

Um mit der Bearbeitungsvorrichtung 100 eine Kurve auf der Werkstückoberfläche zu fahren, kann einer der Raupengurte 152 eines Paars paralleler Fahrbalken 148 mit einer größeren Geschwindigkeit bewegt werden als der jeweils andere Raupengurt 152 des Fahrbalkenpaars.

Um die Bearbeitungsvorrichtung 100 auf der Stelle drehen zu lassen, kann ferner vorgesehen sein, dass die Raupengurte 152 eines Paars von parallelen Fahrbalken 148 in einander entgegengesetzte Richtungen um die jeweiligen Raupenantriebsräder 150 laufen.

Um die bisherige Bewegungsrichtung der Bearbeitungsvorrichtung 100 längs der Werkstückoberfläche um einen Winkel von 90° zu drehen, werden die bislang aktiven Fahrbalken 148, beispielsweise die zur X-Achse 106 parallelen Fahrbalken 148a, von der Werkstückoberfläche abgehoben, nachdem das Paar der hierzu quer verlaufenden Fahrbalken 148, beispielsweise der Fahrbalken 148b, auf die Werkstückoberfläche abgesetzt worden ist. Anschließend können die neu auf das Werkstück aufgesetzten Fahrbalken in Betrieb genommen werden, um die Bearbeitungsvorrichtung 100 in einer um 90° gedrehten Bewegungsrichtung längs der Werkstückoberfläche fortzubewegen.

Die Bearbeitungsvorrichtung 100 kann sich auf diese Weise frei längs der Werkstückoberfläche innerhalb des zur Bearbeitung vorgesehenen Bereichs des Werkstücks bewegen.

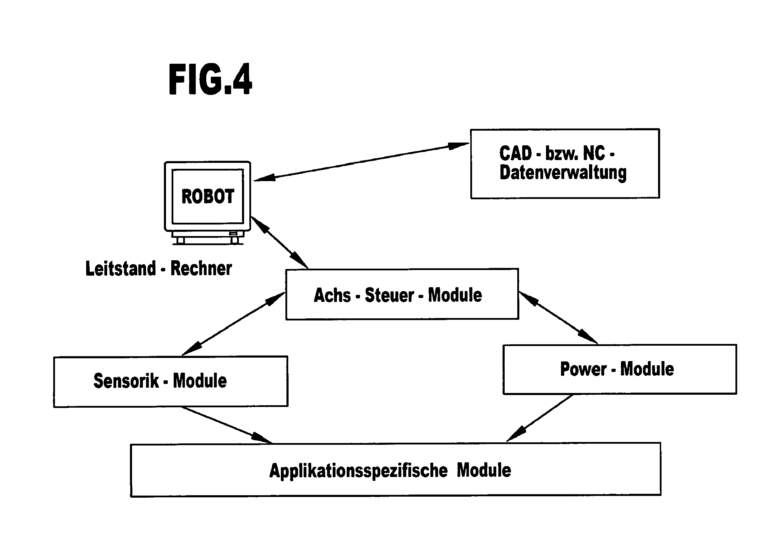

Die Steuerungsvorrichtung für die Bearbeitungsvorrichtung 100 ist schematisch in Fig. 4 dargestellt und umfasst ein Leistand-Rechnermodul, das die Verbindung zu einer übergeordneten CAD- bzw. NC-Datenverwaltung darstellt. In diesem Modul werden die Standard-CAD-Daten bzw. NC-Daten des Werkstücks übernommen und an die kinematischen Gegebenheiten der Bearbeitungsvorrichtung 100 angepasst.

Diese aufbereiteten Daten leitet der Leistand-Rechner an an der Bearbeitungsvorrichtung 100 selbst vorgesehene Achs-Steuer-Module weiter. Die Datenübertragung kann dabei per Kabel, durch Funk oder durch optische Datenübertragung (beispielsweise durch Infrarot-Datenübertragung) erfolgen.

Die Achs-Steuer-Module verarbeiten die vom Leistand-Rechner aufbereiteten Daten und generieren selbsttätig Bewegungsmuster für die Bearbeitungsvorrichtung 100. Diese Bewegungsmuster werden durch die Achs-Steuer-Module zur Ausführung freigegeben und überwacht.

Die Achs-Steuer-Module stehen in Verbindung mit Sensorik-Modulen, in denen die benötigten Sensoren zur Steuerung der Bearbeitungsvorrichtung 100 zusammengefasst sind. Je nach der Bearbeitungsaufgabe, für welche die Bearbeitungsvorrichtung 100 vorgesehen ist, werden in den Sensorik-Modulen beispielsweise Referenzmarken mittels einer Videokamera erkannt, oder es wird eine Kantendetektion mittels Lasersystemen durchgeführt.

Ferner sind die Achs-Steuer-Module mit sogenannten Power-Modulen verbunden, welche für die Energieversorgung der einzelnen Module der Steuerung der Bearbeitungsvorrichtung 100 und für die applikationsspezifischen Endverbraucher, je nach Bestimmungszweck der Bearbeitungsvorrichtung 100, zuständig sind. Die Energieversorgung der Bearbeitungsvorrichtung 100 kann beispielsweise über Schleppkabel-Systeme durchgeführt werden. Alternativ hierzu ist auch ein Akkubetrieb der Bearbeitungsvorrichtung 100 möglich.

Die Sensorik-Module und die Power-Module sind mit applikationsspezifischen Modulen verbunden, welche den Bearbeitungsvorgang der jeweils an der Bearbeitungsvorrichtung 100 angeordneten Bearbeitungseinheit steuern.

Um mit der vorstehend beschriebenen Bearbeitungsvorrichtung 100, deren Bearbeitungseinheit 140 beispielsweise als eine Bohr-Niet-Einheit ausgebildet ist, eine Längsnaht an einem Flugzeugbauteil zu bearbeiten, wird wie folgt vorgegangen:

Die Bearbeitungsvorrichtung 100 wird mit einem Hilfsgerät an der Werkstückoberfläche, d.h. an dem Flugzeugbauteil, abgesetzt.

Anschließend werden die erforderlichen Vakuum-, Druckluft- und elektrischen Verbindungen hergestellt.

Am Leitstand-Rechner wird die zu bearbeitende Sektion des Werkstücks und die Nahtlage angewählt. Das erforderliche Standard-NC-Programm wird ausgewählt, aufbereitet und an die Achs-Steuer-Module der Bearbeitungsvorrichtung 100 übertragen.

Auch weitere Informationen, wie beispielsweise eine Bauteil-Nummer, ein Bauteil-Typ etc., können am Leitstand-Rechner ausgewählt, verwaltet und angezeigt werden.

Nachdem die Bearbeitungsvorrichtung 100 ungefähr mittig auf einer zu bearbeitenden Naht aufgesetzt worden ist und die Evakuierung der Vakuumtaschen 154 der auf die Werkstückoberfläche aufgesetzten Fahrbalken 148 aktiviert worden ist, werden die folgenden Schritte ausgeführt:

Die Sensorik-Module werden aktiviert, damit sich die Bearbeitungsvorrichtung 100 auf der Werkstückoberfläche orientieren kann. Beispielsweise mit Hilfe einer CCD-Matrixkamera und eines Laserentfernungsmesssystems werden Referenzpunkte auf der Werkstückoberfläche ermittelt. Hierdurch wird die aktuelle Lage der Bearbeitungsvorrichtung 100 an der Werkstückoberfläche ermittelt.

Anschließend wird das geladene NC-Programm in den Achs-Steuer-Modulen analysiert und mit den Positionswerten der ermittelten Referenzpunkte aus den Sensorik-Modulen verglichen. Aus diesen Daten werden die benötigten Positions-Offsetwerte berechnet.

Anhand dieser Daten wird der Grundrahmen 104 der Bearbeitungsvorrichtung 100 durch Verfahren der Bearbeitungsvorrichtung 100 über die Werkstückoberfläche in eine solche Position bewegt, dass ein komplettes Spantfeld (d.h. ein kompletter Arbeitsbereich der Bohr-Niet-Einheit) ohne weitere Bewegung des Grundkörpers 102 der Bearbeitungsvorrichtung 100, nur durch Bewegung der Bearbeitungseinheit 140 relativ zum Grundkörper 102 der Bearbeitungsvorrichtung 100, bearbeitet werden kann.

Um den Grundrahmen 104 in diese Position zu bringen, wird eine Bahnberechnung mittels der ermittelten Positionsdaten und Positions-Offsetwerte durchgeführt und die Bewegungsdaten aller Raupenantriebsräder 150 berechnet.

Die so ermittelten Bewegungsdaten werden an die Power-Module übergeben, und alle benötigten Achsen werden gleichzeitig verfahren.

Durch die vorstehend beschriebenen Maßnahmen sind die Lage der Bearbeitungsvorrichtung 100 an der Werkstückoberfläche und die Startposition der Nahtbearbeitung eindeutig bestimmt.

In dieser Position setzt die Bearbeitungseinheit 140 (d.h. die Bohr-Niet-Einheit) die erste Bohrung.

Anschließend werden die weiteren für das betreffende Spantfeld benötigten Bohrungen nach den Vorgaben aus dem NC-Programm für dieses Spantfeld gesetzt. Vor jeder Bohrung wird dabei eine Positionsüberprüfung des Grundkörpers 102 der Bearbeitungsvorrichtung 100 durchgeführt.

Ist ein Spantfeld des Werkstücks vollständig bearbeitet, bewegt sich die Bearbeitungsvorrichtung 100 selbsttätig zum nächsten Spantfeld fort.

Hierbei orientiert sich die Bearbeitungsvorrichtung 100 an weiteren Referenzpunkten und/oder an einer Hautfeldkante des Werkstücks. Für diesen Bewegungsablauf werden Daten zwischen den Sensorik-, Achs-Steuer- und Power-Modulen ausgetauscht.

Ist die Bearbeitungsvorrichtung 100 im nächsten zu bearbeitenden Spantfeld angekommen, wird die Lage des Grundkörpers 102 der Bearbeitungsvorrichtung 100 überprüft. Anschließend beginnt die Bearbeitungseinheit 140 (d.h. die Bohr-Niet-Einheit) wieder mit der Bearbeitung des neuen Spantfeldes.

Der vorstehend beschriebene Vorgang wiederholt sich so lange, bis alle Spantfelder der an dem Werkstück herzustellenden Längsnaht bearbeitet sind.

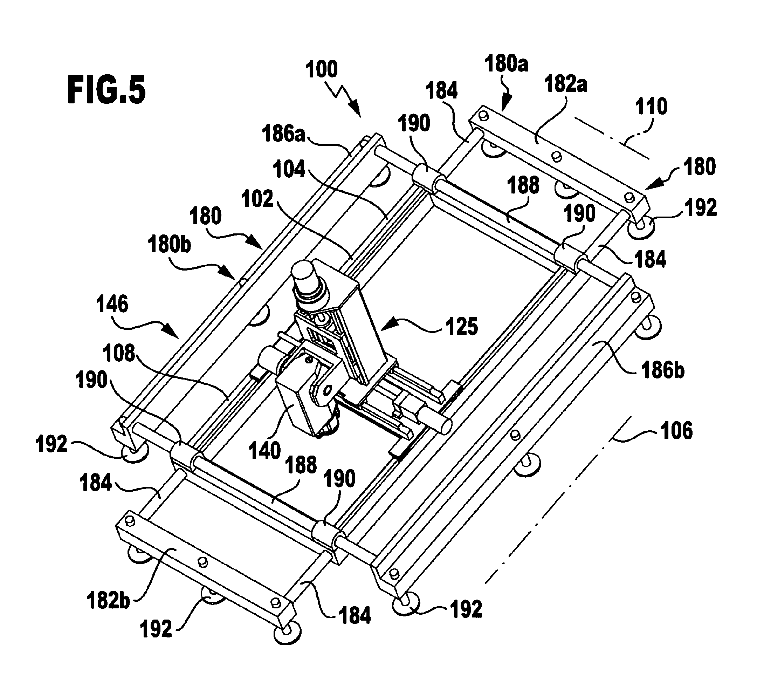

Eine in den Fig. 5 bis 11 dargestellte zweite Ausführungsform einer Bearbeitungsvorrichtung 100 unterscheidet sich von der vorstehend beschriebenen ersten Ausführungsform dadurch, dass die Halte- und Bewegungsvorrichtung 146 der zweiten Ausführungsform keine Raupenantriebe, sondern stattdessen zwei Schreiteinheiten 180 umfasst.

Eine erste Schreiteinheit 180a dient der Bewegung der Bearbeitungsvorrichtung 100 in Richtung der X-Achse 106 und umfasst einen ersten Stützbalken 182a, welcher sich längs der Y-Achse 110 erstreckt und über zwei sich längs der X-Achse 106 erstreckende, in den Grundrahmen 104 einfahrbare und aus demselben ausfahrbare Haltestangen 184 an dem Grundrahmen 104 gehalten ist, sowie einen zweiten Stützbalken 182b, welcher parallel zum ersten Stützbalken 182a ausgerichtet ist und ebenfalls mittels sich längs der X-Achse 106 erstreckender Haltestangen 184, die am gegenüberliegenden Ende des Grundrahmens 104 in denselben einfahrbar oder aus demselben ausfahrbar sind, am gegenüberliegenden Ende des Grundrahmens 104 gehalten ist.

Eine zweite Schreiteinheit 180b, welche zur Bewegung der Bearbeitungsvorrichtung 100 parallel zur Y-Achse 110 vorgesehen ist, umfasst zwei sich parallel zur X-Achse 106 erstreckende Stützbalken 186a, 186b, welche durch sich parallel zur Y-Achse 110 erstreckende Haltestangen 188 miteinander verbunden sind.

Dabei sind die Haltestangen 188 mittels Lagern 190 längs der Y-Achse 110 verschiebbar an dem Grundrahmen 104 gehalten und mittels (nicht dargestellter) Antriebseinheiten zu einer Verschiebebewegung längs der Y-Achse 110 relativ zu dem Grundrahmen 104 antreibbar.

Jeder der Stützbalken 182a, 182b, 186a, 186b umfasst mehrere, beispielsweise drei, Stützschalen 192, die mittels (nicht im einzelnen dargestellter) Hebevorrichtungen von der Werkstückoberfläche abgehoben oder auf die Werkstückoberfläche abgesenkt werden können.

Jede der Stützschalen 192 weist an ihrer der Werkstückoberfläche zugewandten Unterseite ein Halteelement 194 zum lösbaren Festlegen der betreffenden Stützschale 192 an der Werkstückoberfläche auf.

Das Halteelement 194 weist beispielsweise eine evakuierbare Kammer auf, so dass die jeweilige Stützschale 192 durch Evakuieren dieser Kammer an die Werkstückoberfläche angesaugt werden kann.

Die Bearbeitungsvorrichtung 100 kann somit mittels der Stützschalen 192 mit aktiviertem Halteelement 194, d.h. der Stützschalen 192 mit evakuierter Vakuumkammer, an der Werkstückoberfläche gehalten werden.

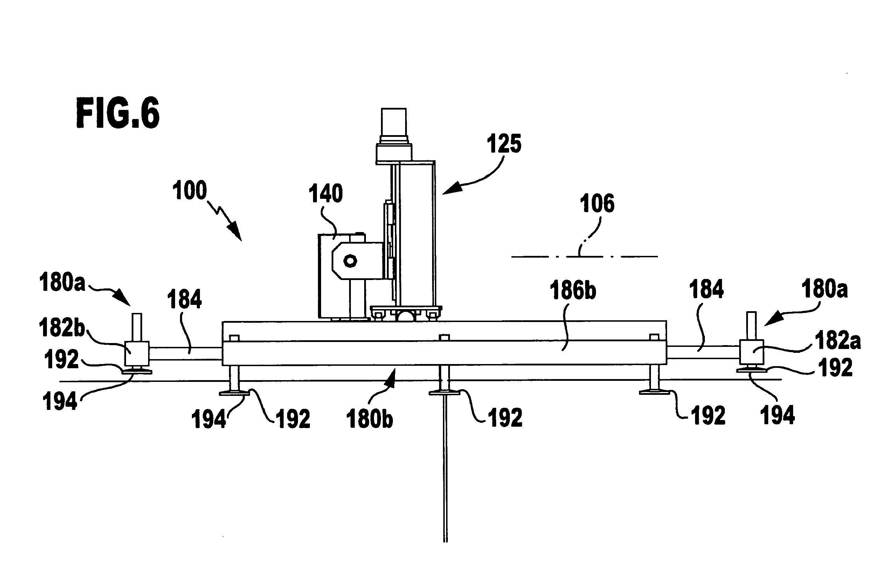

Nachfolgend wird unter Bezugnahme auf die Fig. 6 bis 11 ein Bewegungsvorgang der zweiten Ausführungsform einer Bearbeitungsvorrichtung 100 längs der Werkstückoberfläche beschrieben.

In der in Fig. 6 dargestellten Ausgangssituation sind die Stützschalen 192 der Stützbalken 186a, 186b auf die Werkstückoberfläche abgesenkt und deren Halteelemente 194 aktiviert, um die Bearbeitungsvorrichtung 100 an der Werkstückoberfläche zu halten.

Die Stützbalken 182a, 182b der ersten Schreiteinheit 180a sind beide ungefähr gleich weit aus dem Grundrahmen 104 ausgefahren, die Stützschalen 192 dieser Stützbalken 182a, 182b sind von der Werkstückoberfläche abgehoben und deren Halteelemente 194 deaktiviert.

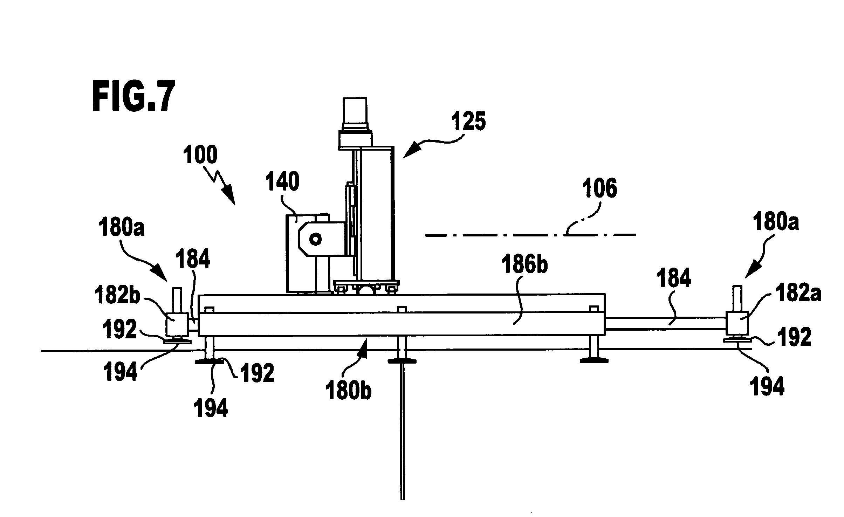

Von dieser Ausgangsposition ausgehend, wird nun der Stützbalken 182a in Richtung der X-Achse 106 ausgefahren, während zugleich der gegenüberliegende Stützbalken 182b in derselben Richtung eingefahren wird (siehe Fig. 7).

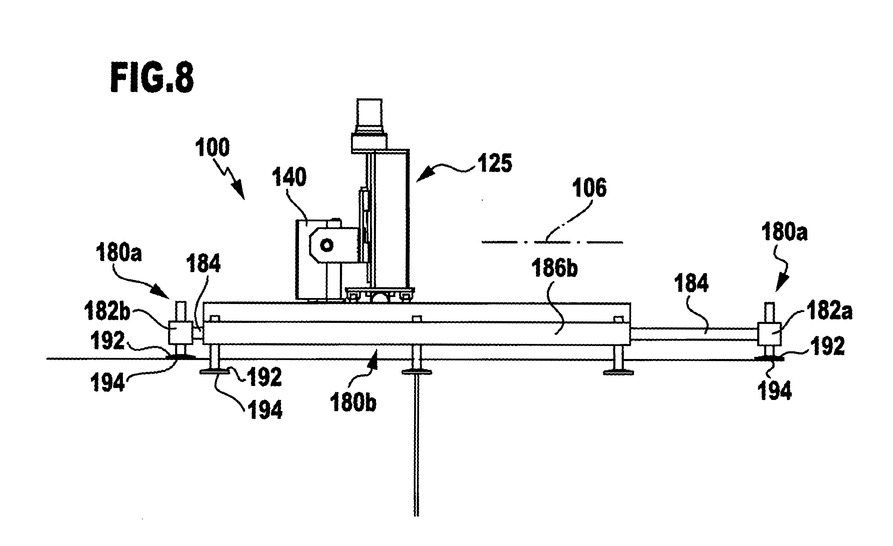

Anschließend werden die Stützschalen 192 der Stützbalken 182a, 182b auf die Werkstückoberfläche abgesenkt und deren Halteelemente 194 aktiviert, so dass die Stützbalken 182a, 182b an der Werkstückoberfläche fixiert sind (siehe Fig. 8).

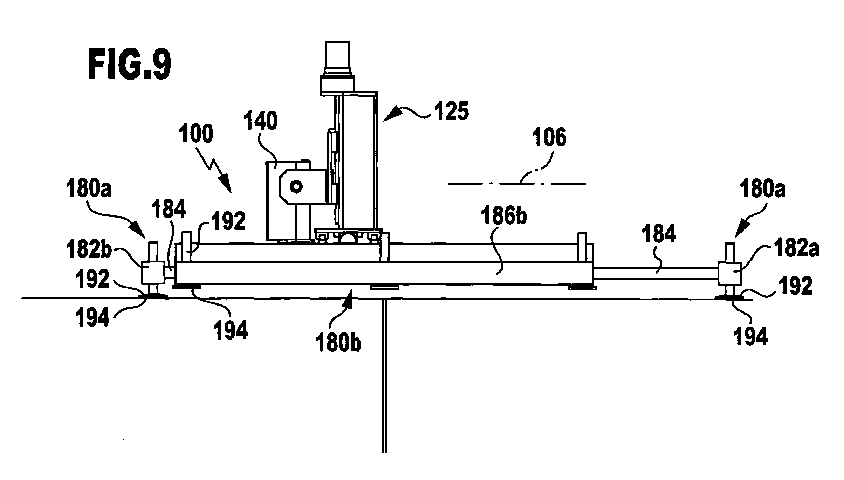

Anschließend werden die Halteelemente 194 der Stützschalen 192 der Stützbalken 186a, 186b der zweiten Schreiteinheit 180b deaktiviert und die Stützschalen 192 von der Werkstückoberfläche abgehoben, um eine Bewegung des Grundkörpers 102 der Bearbeitungsvorrichtung 100 und der Stützbalken 186a, 186b relativ zur Werkstückoberfläche zu ermöglichen (siehe Fig. 9).

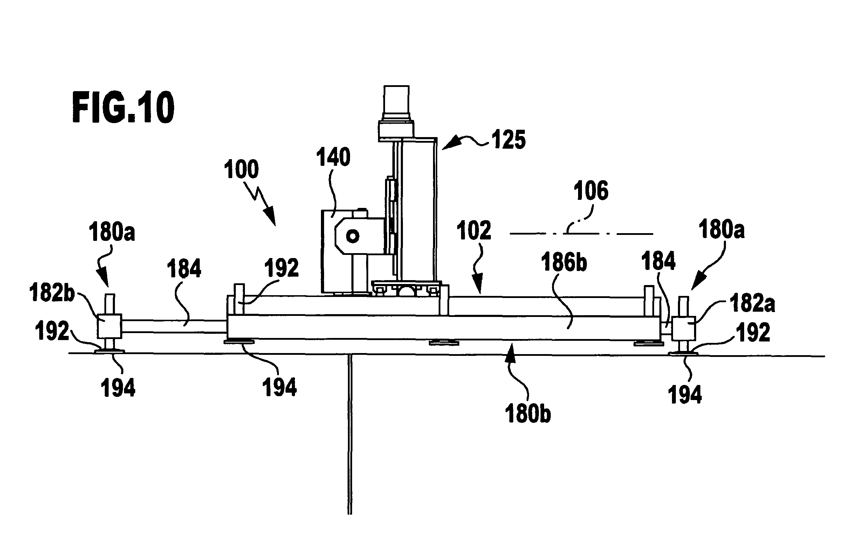

Anschließend wird der Grundkörper 102 der Bearbeitungsvorrichtung 100 zusammen mit den damit verbundenen Stützbalken 186a, 186b in Richtung der X-Achse 106 relativ zu den Stützbalken 182a, 182b verfahren, wodurch sich insbesondere auch die Bearbeitungseinheit 140 in Richtung der X-Achse 106 relativ zur Werkstückoberfläche bewegt (siehe Fig. 10).

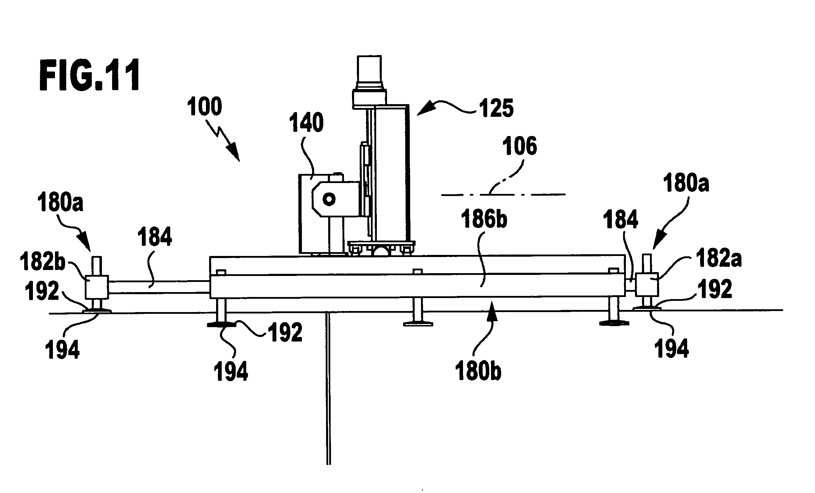

Darauf werden die Stützschalen 192 der Stützbalken 186a, 186b wieder auf die Werkstückoberfläche abgesenkt und deren Halteelemente 194 aktiviert, so dass die Stützbalken 186a, 186b an der Werkstückoberflächen fixiert sind (siehe Fig. 11).

Ein weiterer Schritt der ersten Schreiteinheit 180a längs der X-Achse 106 beginnt aus dieser Stellung, indem die Halteelemente 194 der Stützschalen 192 der Stützbalken 182a, 182b deaktiviert und die Stützschalen 192 von der Werkstückoberfläche abgehoben werden und anschließend die Stützbalken 182a, 182b wiederum längs der X-Achse 106 verfahren werden, worauf sich der vorstehend geschilderte Ablauf wiederholt.

Eine Bewegung in Richtung der Y-Achse 110 läuft in analoger Weise ab, wobei lediglich die Rollen der ersten Schreiteinheit 180a mit den beiden Stützbalken 182a, 182b und der zweiten Schreiteinheit 180b mit den Stützbalken 182a, 182b vertauscht sind.

Die Stützbalken 182a, 182b bzw. 186a, 186b können auch mehrteilig ausgebildet sein, um beispielsweise unterschiedliche Höhenniveaus an der Werkstückoberfläche ausgleichen zu können.

Im übrigen stimmt die in den Fig. 5 bis 11 dargestellte zweite Ausführungsform einer Bearbeitungsvorrichtung 100 hinsichtlich Aufbau und Funktion mit der ersten Ausführungsform überein, auf deren vorstehende Beschreibung insoweit Bezug genommen wird.

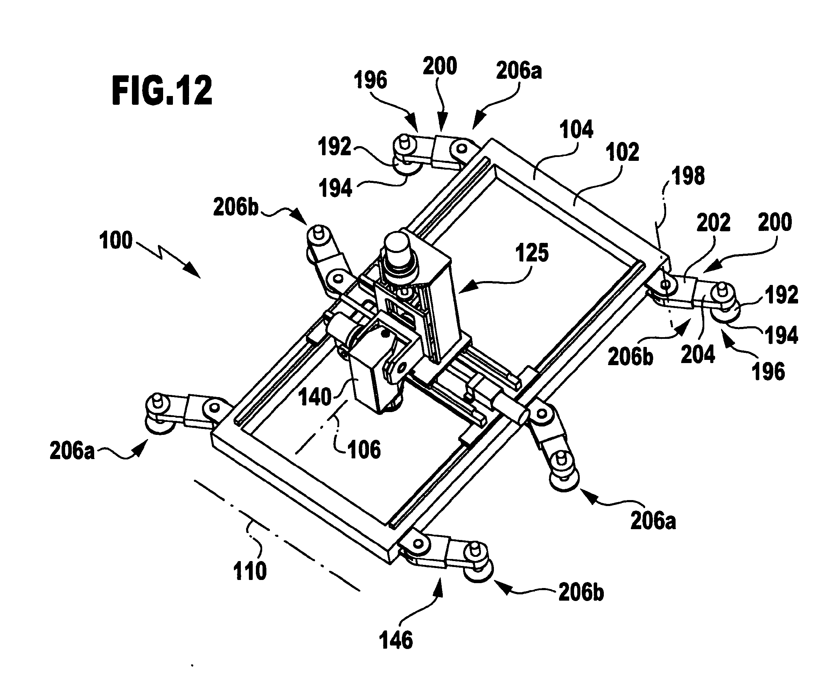

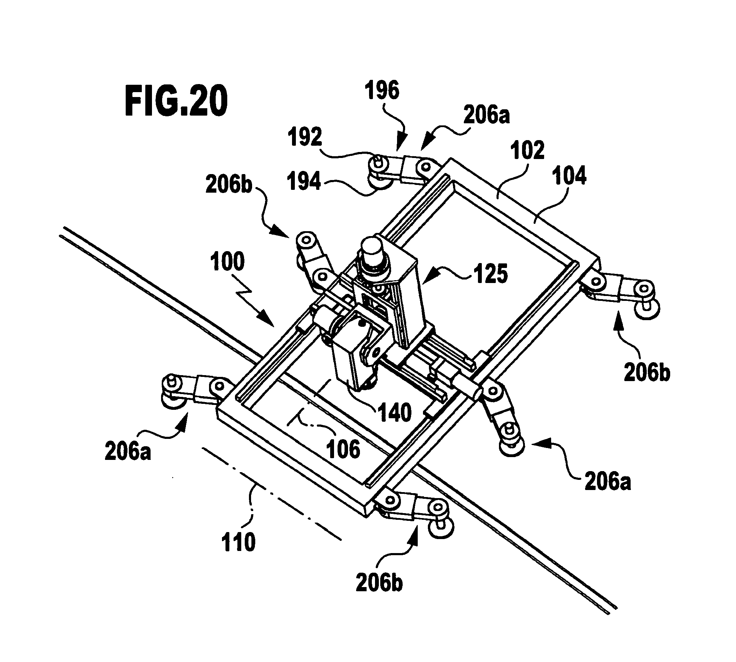

Eine in den Fig. 12 bis 20 dargestellte dritte Ausführungsform einer Bearbeitungsvorrichtung 100 unterscheidet sich von der vorstehend beschriebenen ersten Ausführungsform dadurch, dass die Halte- und Bewegungsvorrichtung 146 keine Raupenantriebe, sondern stattdessen mehrere, beispielsweise sechs, Schwenkfüße 196 umfasst, welche jeweils um eine im wesentlichen vertikale Schwenkachse 198 schwenkbar an dem Grundrahmen 104 der Bearbeitungsvorrichtung 100 gehalten sind.

Jeder der Schwenkfüße 196 umfasst ein längenveränderliches Element 200, das einerseits schwenkbar an dem Grundrahmen 104 gehalten ist und andererseits an seinem freien Ende eine Stützschale 192 trägt, welche mit einer (nicht im einzelnen dargestellten) Hebevorrichtung auf die Werkstückoberfläche absenkbar und von der Werkstückoberfläche abhebbar ist.

Die Längenveränderlichkeit der längenveränderlichen Elemente 200 ist dadurch gegeben, dass diese Elemente ein erstes Teil-Element 202 umfassen, welches schwenkbar an dem Grundrahmen 104 gehalten ist, und ein zweites Teil-Element 204, welches je nach dem aktuellen Abstand zwischen der vertikalen Schwenkachse 198 des Schwenkfußes 196 und der Stützschale 192 des Schwenkfußes 196 unterschiedlich weit in das zugehörige erste Teil-Element 202 eingeschoben ist.

Die Unterseite jeder Stützschale 192 ist mit einer evakuierbaren Kammer versehen und bildet somit ein Halteelement 194, das durch Evakuierung der Vakuumkammer gegen die Werkstückoberfläche gepresst werden kann.

Die Schwenkfüße 196 der Halte- und Bewegungsvorrichtung 146 der Bearbeitungsvorrichtung 100 sind beispielsweise in zwei Gruppen 206a, 206b unterteilt, wobei die Schwenkfüße derselben Gruppe 206a bzw. 206b jeweils gemeinsam bewegt werden.

Die erste Gruppe 206a umfasst beispielsweise den vordersten und den hintersten Schwenkfuß 196 auf der linken Seite des Grundrahmens 104 und den mittleren Schwenkfuß auf der rechten Seite des Grundrahmens 104, während die zweite Gruppe 206b beispielsweise den vordersten und den hintersten Schwenkfuß 196 auf der rechten Seite des Grundrahmens 104 sowie den mittleren Schwenkfuß 196 auf der linken Seite des Grundrahmens 104 umfasst.

Die Schwenkfüße 196 sind mittels (nicht dargestellter) Schwenkantriebseinheiten relativ zu dem Grundrahmen 104 um die jeweilige vertikale Schwenkachse 198 schwenkbar.

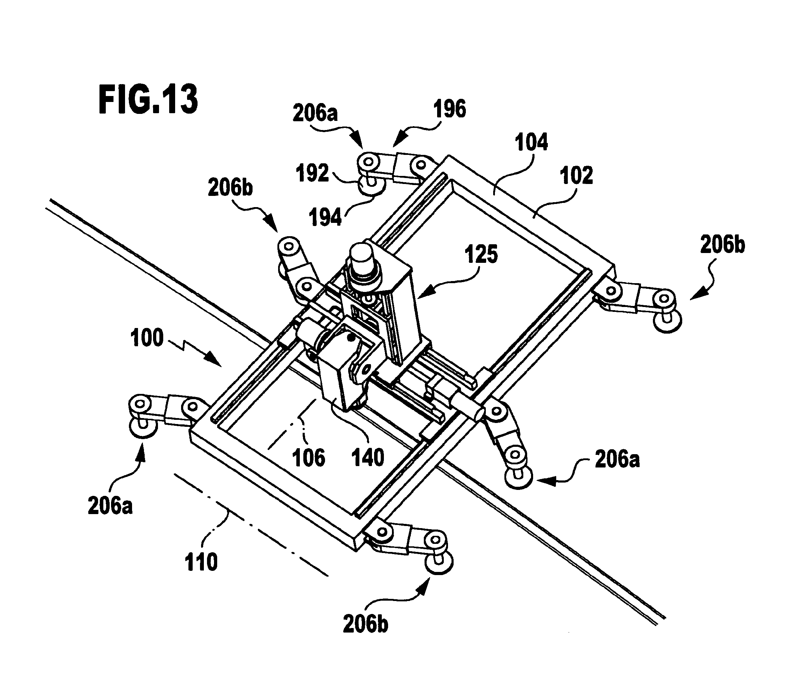

Ein Bewegungsvorgang der dritten Ausführungsform einer Bearbeitungsvorrichtung 100 wird im folgenden unter Bezugnahme auf die Fig. 13 bis 20 beschrieben.

In der in Fig. 13 dargestellten Ausgangssituation sind die Schwenkfüße 196 der ersten Gruppe 206a relativ zu dem Grundrahmen 104 (in der gewünschten Bewegungsrichtung gesehen) nach hinten geschwenkt, während die Schwenkfüße 196 der zweiten Gruppe 206b relativ zu dem Grundrahmen 104 nach vorne geschwenkt sind. Die Stützschalen 192 aller Schwenkfüße 196 sind auf die Werkstückoberfläche abgesenkt, und deren Halteelemente 194 sind aktiviert, um die Bearbeitungsvorrichtung 100 an der Werkstückoberfläche zu fixieren.

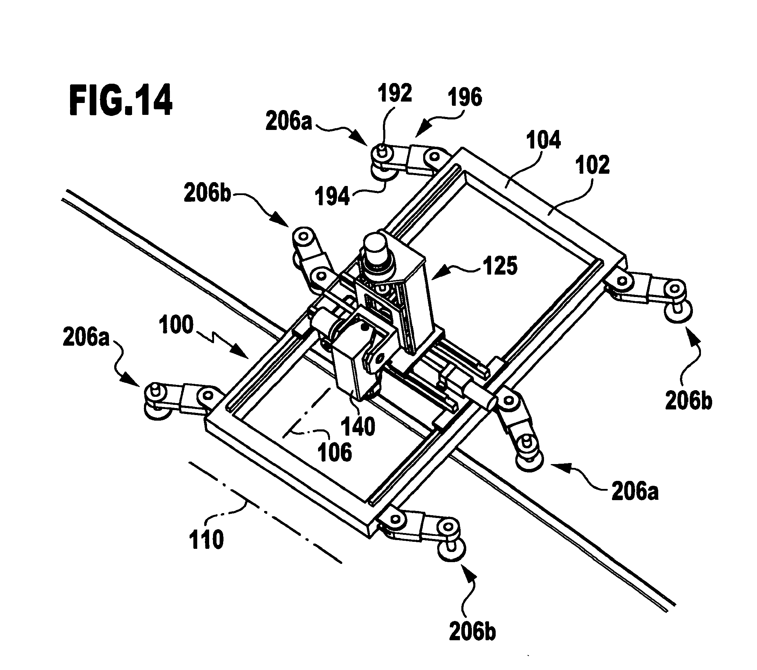

Von dieser Ausgangsstellung ausgehend werden zunächst die Halteelemente 194 der Stützschalen 192 der ersten Gruppe 206a von Schwenkfüßen 196 deaktiviert, und die Stützschalen 192 der ersten Gruppe 206a von Schwenkfüßen 196 werden von der Werkstückoberfläche abgehoben, um eine Bewegung dieser Schwenkfüße 196 relativ zur Werkstückoberfläche zu ermöglichen (siehe Fig. 14).

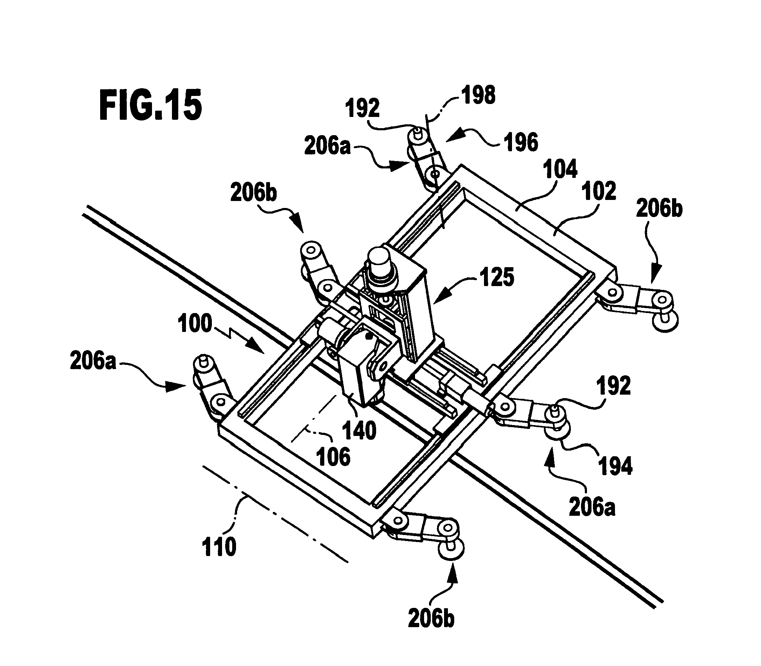

Anschließend werden die Schwenkfüße 196 der ersten Gruppe 206a relativ zu dem Grundrahmen 104 um die jeweilige vertikale Schwenkachse 198 nach vorne geschwenkt (siehe Fig. 15).

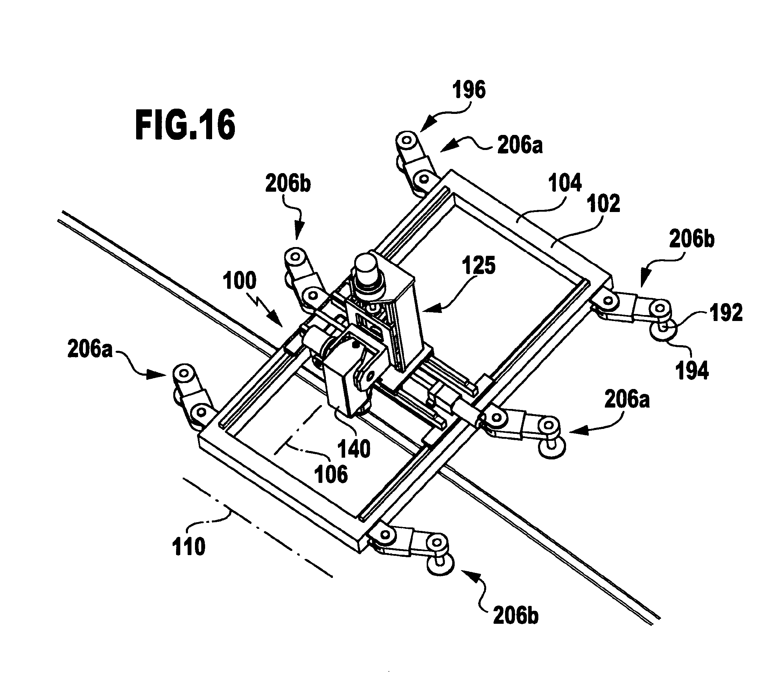

Nach Abschluss der Schwenkbewegung werden die Stützschalen 192 der ersten Gruppe 206a von Schwenkfüßen 196 auf die Werkstückoberfläche abgesenkt, und deren Halteelemente 194 werden aktiviert, um diese Schwenkfüße 196 an der Werkstückoberfläche zu fixieren (siehe Fig. 16).

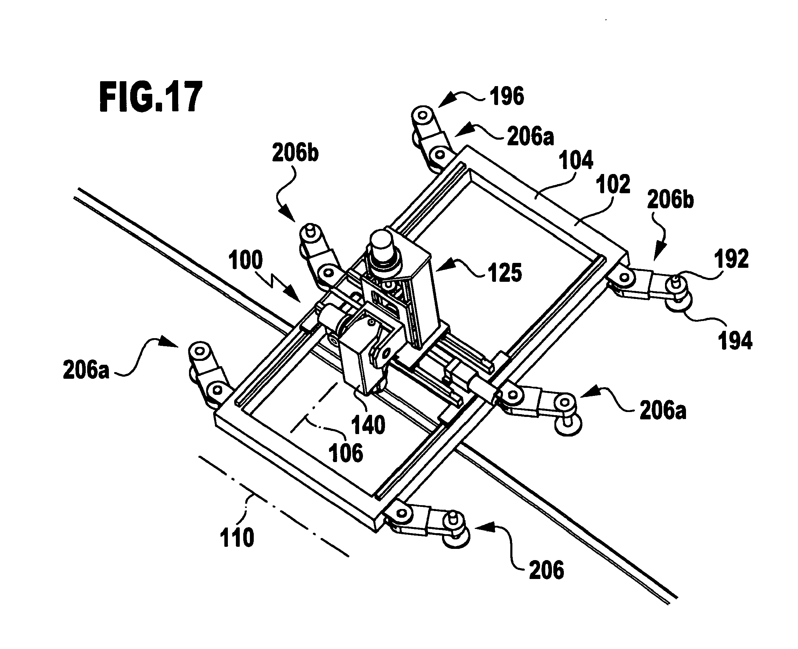

Anschließend werden die Halteelemente 194 der Stützschalen 192 der zweiten Gruppe 206b von Schwenkfüßen 196 deaktiviert, und die Stützschalen 192 der Schwenkfüße 196 der zweiten Gruppe 206b werden von der Werkstückoberfläche abgehoben, um eine Bewegung dieser Schwenkfüße 196 relativ zur Werkstückoberfläche zu ermöglichen (siehe Fig. 17).

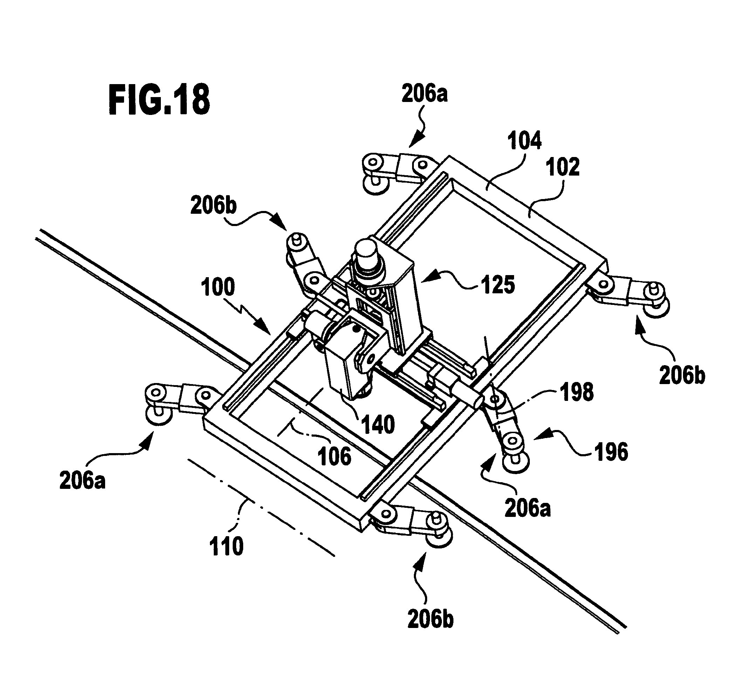

Darauf wird der Grundrahmen 104 in Richtung der X-Achse 106 in die gewünschte Bewegungsrichtung geschoben, indem die an der Werkstückoberfläche fixierten Schwenkfüße 196 der ersten Gruppe 206a relativ zum Grundrahmen 104 um ihre jeweilige vertikale Schwenkachse 198 nach hinten geschwenkt werden, was aufgrund der Fixierung dieser Schwenkfüße 196 an der Werkstückoberfläche eine Vorwärtsbewegung des Grundrahmens 104 relativ zur Werkstückoberfläche zur Folge hat. Zusammen mit dem Grundrahmen 104 werden auch die daran gehaltenen Schwenkfüße 196 der zweiten Gruppe 206b in Richtung der X-Achse 106 vorwärts bewegt (siehe Fig. 18).

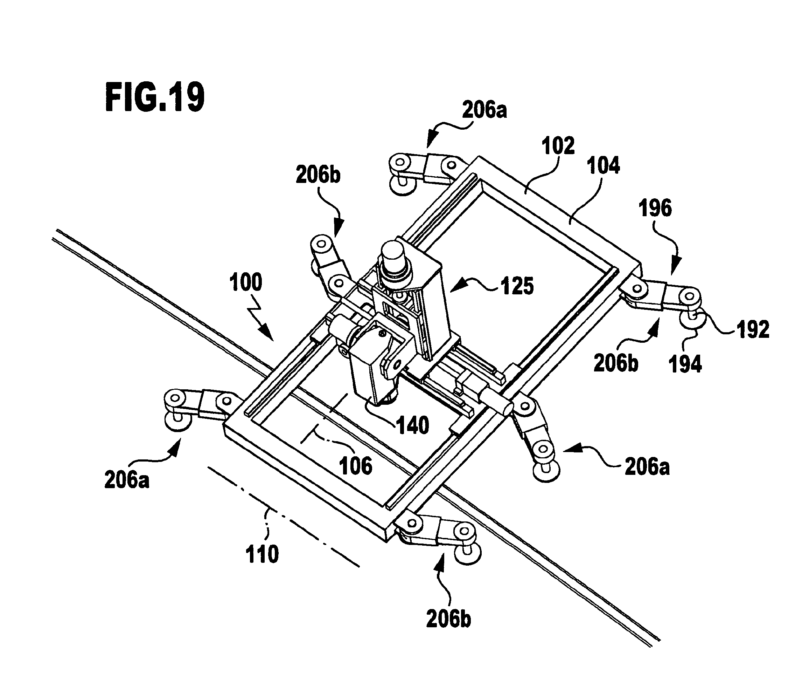

Anschließend werden die Stützschalen 192 der Schwenkfüße 196 der zweiten Gruppe 206b auf die Werkstückoberfläche abgesenkt, und deren Halteelemente 194 werden aktiviert, um diese Schwenkfüße 196 an der Werkstückoberfläche zu fixieren (siehe Fig. 19).

Damit ist in einer längs der X-Achse 106 relativ zur Werkstückoberfläche verschobenen Position wiederum die in Fig. 13 dargestellte Ausgangsstellung der Schwenkfüße 196 erreicht.

Ein nächster Bewegungsschritt wird aus dieser Stellung eingeleitet, indem die Halteelemente 194 der Stützschalen 192 der Schwenkfüße 196 der ersten Gruppe 206a von Schwenkfüßen deaktiviert und die Stützschalen 192 der Schwenkfüße 196 der ersten Gruppe 206a von der Werkstückoberfläche abgehoben werden, um eine Bewegung dieser Schwenkfüße 196 relativ zur Werkstückoberfläche zu ermöglichen.

Im übrigen stimmt die in den Fig. 12 bis 20 dargestellte dritte Ausführungsform einer Bearbeitungsvorrichtung 100 hinsichtlich Aufbau und Funktion mit der ersten Ausführungsform überein, auf deren vorstehende Beschreibung insoweit Bezug genommen wird.

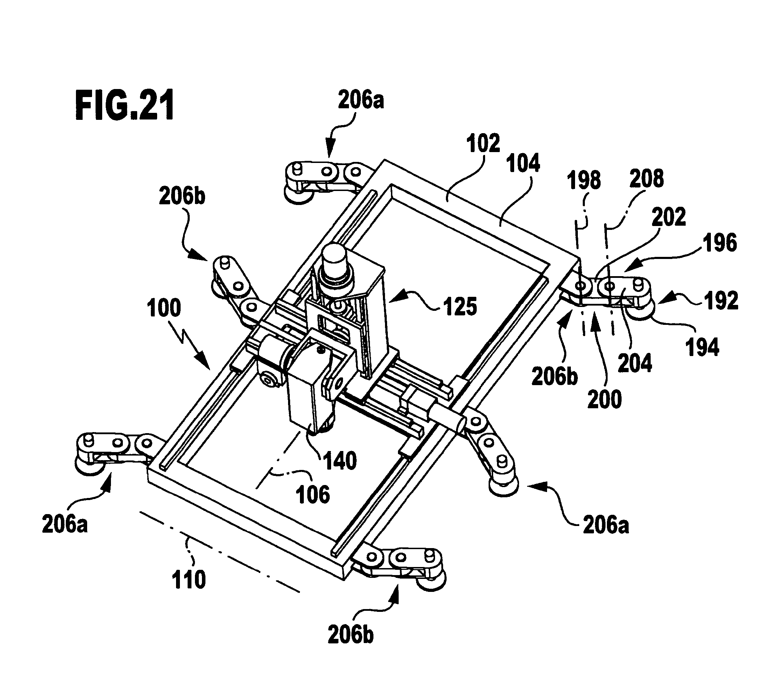

Eine in Fig. 21 dargestellte vierte Ausführungsform einer Bearbeitungsvorrichtung 100 unterscheidet sich von der vorstehend beschriebenen dritten Ausführungsform lediglich dadurch, dass der Längenausgleich der längenveränderlichen Elemente 200 der Schwenkfüße 196 nicht über einen Teleskopmechanismus, sondern über eine zweite vertikale Schwenkachse 208 realisiert wird.

Bei dieser Ausführungsform umfasst jeder Schwenkfuß 196 ein erstes Teil-Element 202, das um eine erste vertikale Schwenkachse 198 schwenkbar an dem Grundrahmen 104 gehalten ist, sowie ein zweites Teil-Element 204, das um eine zweite vertikale Schwenkachse 208 schwenkbar an dem ersten Teil-Element 202 gehalten ist.

Das freie Ende des zweiten Teil-Elements 204 trägt jeweils eine Stützschale 192 mit einem Halteelement 194 zum Fixieren der Stützschale 192 an der Werkstückoberfläche.

Durch das Vorhandensein der zweiten vertikalen Schwenkachse 208 kann auch bei dieser Ausführungsform die Länge des längenveränderlichen Elements 200, d.h. der Abstand zwischen der ersten vertikalen Schwenkachse 198 und der Stützschale 192, veränderlich sein, so dass auch bei dieser Ausführungsform der Grundrahmen 104 durch eine Schwenkbewegung der an der Werkstückoberfläche fixierten Schwenkfüße 196 relativ zu deren an der Werkstückoberfläche fixierten Stützschalen 192 und damit relativ zu der Werkstückoberfläche vorwärts bewegt werden kann.

Im übrigen stimmt die in Fig. 21 dargestellte vierte Ausführungsform einer Bearbeitungsvorrichtung 100 hinsichtlich Aufbau und Funktion mit der in den Fig. 12 bis 20 dargestellten dritten Ausführungsform überein, auf deren vorstehende Beschreibung insoweit Bezug genommen wird.

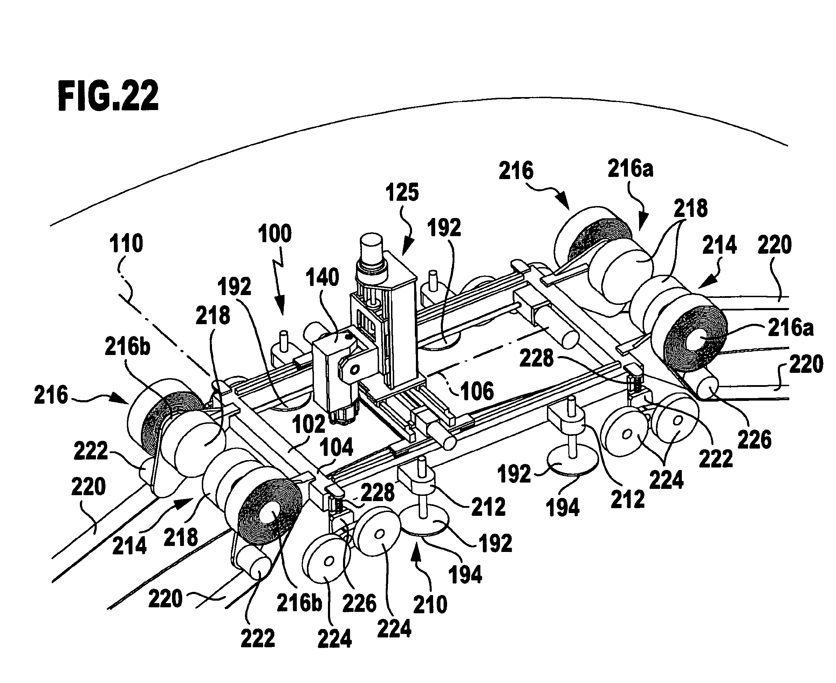

Eine in Fig. 22 dargestellte fünfte Ausführungsform einer Bearbeitungsvorrichtung 100 unterscheidet sich von den vorstehend beschriebenen Ausführungsformen dadurch, dass die Funktionen des Haltens der Bearbeitungsvorrichtung 100 an der Werkstückoberfläche einerseits und des Bewegens der Bearbeitungsvorrichtung 100 relativ zur Werkstückoberfläche andererseits durch getrennte Funktionseinheiten realisiert werden.

So ist zur Realisierung der Haltefunktion eine Haltevorrichtung 210 vorgesehen, welche mehrere, beispielsweise vier, Stützschalen 192 umfasst, die an dem Grundrahmen 104 über Haltelaschen 212 gehalten und mittels (nicht dargestellter) Hebeeinrichtungen relativ zum Grundrahmen 104 von der Werkstückoberfläche abhebbar und auf die Werkstückoberfläche absenkbar sind.

An der Unterseite jeder Stützschale 192 ist ein Halteelement 194 vorgesehen, das zur Fixierung der Stützschale 192 an der Werkstückoberfläche dient.

Jedes Halteelement 194 kann beispielsweise eine Vakuumkammer aufweisen, welche bei Aktivierung des Halteelements 194 evakuiert wird, um die Stützschale 192 an die Werkstückoberfläche anzusaugen.

Um die fünfte Ausführungsform einer Bearbeitungsvorrichtung 100 längs der Werkstückoberfläche zu bewegen, ist eine Bewegungsvorrichtung 214 vorgesehen, welche zwei Paare von Gurttrommeln 216 umfasst, wobei ein Paar von Gurttrommeln 216a an einem vorderen Ende und ein weiteres Paar von Gurttrommeln 216b an einem hinteren Ende des Grundkörpers 102 der Bearbeitungsvorrichtung 100 angeordnet ist.

Jede Gurttrommel 216 ist mittels eines jeweils zugeordneten Drehantriebs 218 zu einer Drehbewegung um eine beispielsweise parallel zur Y-Achse 110 verlaufende Drehachse antreibbar, um jeweils einen Zuggurt 220 auf die betreffende Gurttrommel 216 aufzuwickeln bzw. - bei umgedrehter Drehrichtung - von der betreffenden Gurttrommel 216 abzuwickeln.

Um die Zuggurte 220 im Bereich der Gurttrommeln 216 gespannt zu halten, werden die Zuggurte 220 über Spannrollen 222 geführt.

Während der Bewegung der Bearbeitungsvorrichtung 100 längs der Werkstückoberfläche sind die Halteelemente 194 der Stützschalen 192 der Haltevorrichtung 210 deaktiviert und die Stützschalen 192 von der Werkstückoberfläche abgehoben, um eine Bewegung der Bearbeitungsvorrichtung 100 relativ zur Werkstückoberfläche zu ermöglichen.

Während dieser Bewegung ist der Grundkörper 102 der Bearbeitungsvorrichtung 100 durch Räder 224 an der Werkstückoberfläche abgestützt, welche auf der Werkstückoberfläche abrollen.

Die Räder 224 sind jeweils paarweise um eine im wesentlichen horizontale Achse schwenkbar an einer Radhalterung 226 gehalten, welche ihrerseits in vertikaler Richtung verschieblich und mittels einer Druckfeder 228 gegen die Werkstückoberfläche vorgespannt an dem Grundrahmen 104 gehalten ist.

Insgesamt können beispielsweise vier Paare solcher Räder 224 vorgesehen sein, die an den vier Ecken des im wesentlichen rechteckigen Grundrahmens 104 der Bearbeitungsvorrichtung 100 angeordnet sind.

Die Anzahl und Ausführung der Räder 224 richtet sich nach den zulässigen Belastungen und den übrigen Eigenschaften der Werkstückoberfläche.

Die Vorwärts- oder Rückwärtsbewegung der Bearbeitungsvorrichtung 100 längs der X-Achse 106 erfolgt durch das Aufwickeln bzw. Abwickeln der Zuggurte 220 von den Gurttrommeln 216.

Um die Bearbeitungsvorrichtung 100 in Richtung der X-Achse 106 vorwärts zu bewegen, werden die Zuggurte 220 auf die vorne am Grundrahmen 104 angeordneten Gurttrommeln 216a aufgewickelt und gleichzeitig die Zuggurte 220 von den am hinteren Ende des Grundrahmens 104 angeordneten Gurttrommeln 216b abgewickelt.

Die Zuggurte 220 sind außerhalb des von der Bearbeitungsvorrichtung 100 zu bearbeitenden Bereichs des Werkstücks entweder am Werkstück selbst oder aber an einer außerhalb des Werkstücks angeordneten Halterung, beispielsweise an einem Montagegerüst, festgelegt.

Wenn die vorgesehene Bearbeitungsposition erreicht ist, werden die Drehantriebe 218 der Gurttrommeln 216 abgeschaltet, die Stützschalen 192 der Haltevorrichtung 210 auf die Werkstückoberfläche abgesenkt und deren Halteelemente 194 aktiviert, um die Bearbeitungsvorrichtung 100 an der Werkstückoberfläche zu fixieren.

Die Gurttrommeln 216 sind mit Bremsvorrichtungen ausgestattet, welche verhindern, dass im Ruhezustand die Zuggurte 220 von den Gurttrommeln 216 abgewickelt werden.

Die Anzahl der Stützschalen 192 sowie die Gesamtfläche der Halteelemente 194 wird in Abhängigkeit von der zulässigen Belastung der Werkstückoberfläche gewählt.

Durch die Überwachung der Zugkräfte in den Zuggurten 220 während der Bewegung der Bearbeitungsvorrichtung 100 ist eine definierte Auflagekraft an der Werkstückoberfläche sowie ein definierter Raddruck am Grundrahmen 104 einstellbar.

Ggf. durch eine unregelmäßige Gestaltung der Werkstückoberfläche erforderlich werdende Längenausgleiche der einzelnen Zuggurte 220 können durch unterschiedliche Drehgeschwindigkeiten der Gurttrommeln 216 und/oder durch verstellbare Gurtumlenkpunkte realisiert werden.

Alternativ zu der vorstehend beschriebenen Ausführungsform, bei welcher Endbereiche der Zuggurte 220 auf die Gurttrommeln 216 an der Bearbeitungsvorrichtung 100 aufgewickelt sind, kann auch vorgesehen sein, dass endlose Zuggurte 220 verwendet werden und die Gurttrommeln 216 durch Spannrollen mit Drehantrieb ersetzt werden, welche dann längs der endlosen Zuggurte 220 abrollen und auf diese Weise die Bearbeitungsvorrichtung 100 in der Längsrichtung der Zuggurte 220 bewegen.

Im übrigen stimmt die in Fig. 22 dargestellte fünfte Ausführungsform einer Bearbeitungsvorrichtung 100 hinsichtlich Aufbau und Funktion mit der in den Fig. 1 bis 4 dargestellten ersten Ausführungsform überein, auf deren vorstehende Beschreibung insoweit Bezug genommen wird.

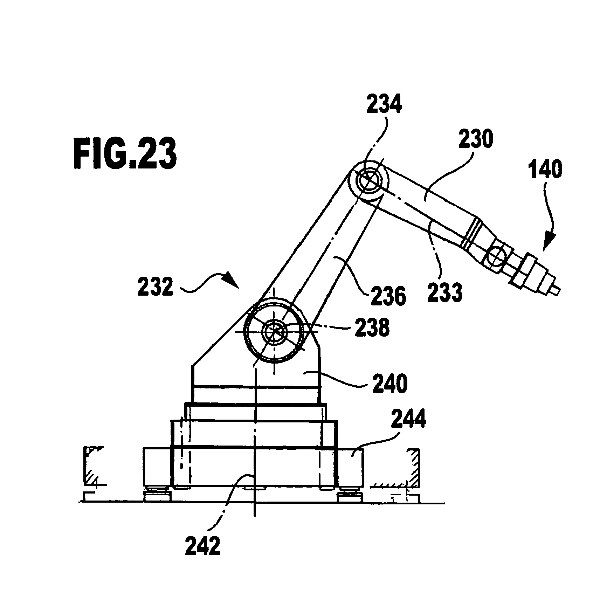

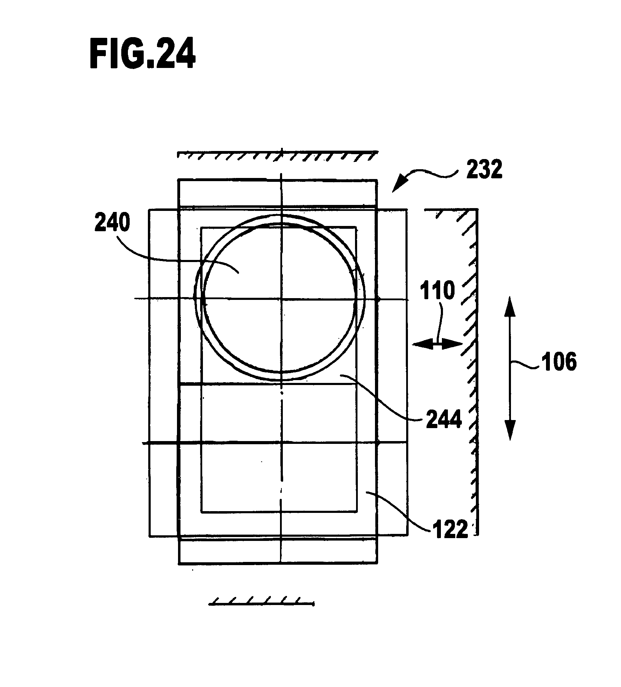

Die bei den vorstehenden Ausführungsformen einer Bearbeitungsvorrichtung 100 an einem Portalroboter mit einem Aufbau 126, einem Z-Schlitten 132 und einer Schwenkhalterung 136 gehaltene Bearbeitungseinheit 140 kann alternativ hierzu auch an einem Arm 230 eines in den Fig. 23 und 24 dargestellten Knickarmroboters 232 gehalten sein.

Dabei kann die Bearbeitungseinheit 140 um eine Längsachse 233 des Arms 230 schwenkbar gehalten sein.

Der Arm 230 ist um eine Schwenkachse 234 schwenkbar an einem weiteren Arm 236 des Knickarmroboters 232 gehalten, welcher seinerseits um eine Schwenkachse 238 schwenkbar an einer Schwenkhalterung 240 gehalten ist.

Die Schwenkhalterung 240 ist um eine im wesentlichen vertikale Drehachse 242 um eine Basis 244 des Knickarmroboters 232 drehbar.

Die Basis 244 ist ihrerseits an einem Y-Schlitten 122 angeordnet, welcher in Richtung der Y-Achse 110 verfahrbar an einem X-Schlitten 116 angeordnet ist, welcher in Richtung der X-Achse 106 verfahrbar ist.

Somit ist auch bei Verwendung eines Knickarmroboters 232 statt eines Portalroboters eine ausreichende Beweglichkeit der Bearbeitungseinheit 140 relativ zu dem Grundkörper 102 der Bearbeitungsvorrichtung 100 gewährleistet.

## Patentansprüche

1. Bearbeitungsvorrichtung zur Bearbeitung eines Werkstücks, umfassend mindestens eine Bearbeitungseinheit (140), mindestens eine Haltevorrichtung (146; 210), mittels welcher die Bearbeitungsvorrichtung (100) in einer Bearbeitungsposition an einer Oberfläche des Werkstücks gehalten ist, und mindestens eine Bewegungsvorrichtung (146; 214), mittels welcher die Bearbeitungsvorrichtung (100) längs einer Oberfläche des Werkstücks bewegbar ist, umfasst.

2. Bearbeitungsvorrichtung nach Anspruch 1, **dadurch gekennzeichnet, dass** die Haltevorrichtung (146; 210) mindestens eine evakuierbare Kammer (154) umfasst.

3. Bearbeitungsvorrichtung nach einem der Ansprüche 1 oder 2, **dadurch gekennzeichnet, dass** die Haltevorrichtung (146; 210) mindestens einen Saugnapf umfasst.

4. Bearbeitungsvorrichtung nach einem der Ansprüche 1 bis 3, **dadurch gekennzeichnet, dass** der Kontakt zwischen der Haltevorrichtung (146; 210) und der Oberfläche des Werkstücks lösbar ist.

5. Bearbeitungsvorrichtung nach einem der Ansprüche 1 bis 4, **dadurch gekennzeichnet, dass** die Haltevorrichtung (146; 210) mindestens ein lineares Halteelement umfasst.

6. Bearbeitungsvorrichtung nach Anspruch 5, **dadurch gekennzeichnet, dass** das lineare Halteelement als ein Gurt, ein Seil (178), ein Riemen oder eine Kette ausgebildet ist.

7. Bearbeitungsvorrichtung nach einem der Ansprüche 1 bis 6, **dadurch gekennzeichnet, dass** die Bewegungsvorrichtung (146) mindestens einen Raupenantrieb umfasst.

8. Bearbeitungsvorrichtung nach Anspruch 7, **dadurch gekennzeichnet, dass** die Bearbeitungsvorrichtung (146) mindestens zwei Raupen umfasst, welche quer, vorzugsweise im wesentlichen senkrecht, zueinander ausgerichtet sind.

9. Bearbeitungsvorrichtung nach einem der Ansprüche 7 oder 8, **dadurch gekennzeichnet, dass** der Raupenantrieb eine Vorrichtung zum Evakuieren eines Zwischenraums zwischen einem Raupengurt (152) und einer Oberfläche des Werkstücks umfasst.

10. Bearbeitungsvorrichtung nach einem der Ansprüche 7 bis 9, **dadurch gekennzeichnet, dass** der Raupenantrieb mindestens eine Einrichtung (158) zum Anlegen mindestens eines Raupengurtes (152) an eine Oberfläche des Werkstücks umfasst.

11. Bearbeitungsvorrichtung nach einem der Ansprüche 1 bis 10, **dadurch gekennzeichnet, dass** die Bewegungsvorrichtung (146) mindestens eine Schreiteinheit (180a, 180b) umfasst.

12. Bearbeitungsvorrichtung nach Anspruch 11, **dadurch gekennzeichnet, dass** die Bewegungsvorrichtung (146) mindestens zwei Schreiteinheiten (180a, 180b) zum Schreiten in zwei quer, vorzugsweise im wesentlichen senkrecht, zueinander verlaufenden Richtungen (106, 110) umfasst.

13. Bearbeitungsvorrichtung nach einem der Ansprüche 11 oder 12, **dadurch gekennzeichnet, dass** die Schreiteinheit (180a, 180b) mindestens ein relativ zu einem Grundkörper (102) der Bearbeitungsvorrichtung (100) bewegliches Stützelement (182a, 182b, 186a, 186b) umfasst.

14. Bearbeitungsvorrichtung nach Anspruch 13, **dadurch gekennzeichnet, dass** das Stützelement (182a, 182b, 186a, 186b) mindestens eine Fixiervorrichtung zum Fixieren des Stützelements an einer Oberfläche des Werkstücks umfasst.

15. Bearbeitungsvorrichtung nach Anspruch 14, **dadurch gekennzeichnet, dass** die Fixiervorrichtung mindestens eine in Kontakt mit der Oberfläche des Werkstücks bringbare und von der Oberfläche des Werkstücks lösbare Stützschale (192) umfasst.

16. Bearbeitungsvorrichtung nach einem der Ansprüche 1 bis 15, **dadurch gekennzeichnet, dass** die Bewegungsvorrichtung (146) mindestens einen Schwenkfuß (196) umfasst.

17. Bearbeitungsvorrichtung nach Anspruch 16, **dadurch gekennzeichnet, dass** der Schwenkfuß (192) mindestens eine Fixiervorrichtung zum Fixieren des Schwenkfußes (192) an einer Oberfläche des Werkstücks umfasst.

18. Bearbeitungsvorrichtung nach Anspruch 17, **dadurch gekennzeichnet, dass** die Fixiervorrichtung mindestens eine in Kontakt mit der Oberfläche des Werkstücks bringbare und von der Oberfläche des Werkstücks lösbare Stützschale (192) umfasst.

19. Bearbeitungsvorrichtung nach einem der Ansprüche 16 bis 18, **dadurch gekennzeichnet, dass** der Schwenkfuß (196) über ein längenveränderliches Element (200) schwenkbar mit einem Grundkörper (102) der Bearbeitungsvorrichtung (100) verbunden ist.

20. Bearbeitungsvorrichtung nach einem der Ansprüche 16 bis 19, **dadurch gekennzeichnet, dass** der Schwenkfuß (196) ein erstes Element (202) aufweist, das schwenkbar an einem Grundkörper (102) der Bearbeitungsvorrichtung (100) gehalten ist, und ein zweites Element (204), das schwenkbar an dem ersten Element (202) gehalten ist.

21. Bearbeitungsvorrichtung nach einem der Ansprüche 1 bis 20, **dadurch gekennzeichnet, dass** die Bewegungsvorrichtung (214) mindestens ein an einer Oberfläche des Werkstücks abrollendes Rad (224) umfasst.

22. Bearbeitungsvorrichtung nach einem der Ansprüche 1 bis 21, **dadurch gekennzeichnet, dass** die Bewegungsvorrichtung mindestens eine Aufwickelvorrichtung und/oder mindestens eine Abwickelvorrichtung für ein lineares Zugelement (220) umfasst.

23. Bearbeitungsvorrichtung nach einem der Ansprüche 1 bis 22, **dadurch gekennzeichnet, dass** die Bewegungsvorrichtung mindestens eine Antriebsrolle aufweist, die längs eines linearen Zugelements abrollt.

24. Bearbeitungsvorrichtung nach einem der Ansprüche 22 oder 23, **dadurch gekennzeichnet, dass** das lineare Zugelement als ein Gurt (220), ein Seil, ein Riemen, ein Zahnriemen oder eine Kette ausgebildet ist.

25. Bearbeitungsvorrichtung nach einem der Ansprüche 1 bis 24, **dadurch gekennzeichnet, dass** die Bearbeitungsvorrichtung (100) einen Grundkörper (102) umfasst und dass die Bearbeitungseinheit (140) längs mindestens einer Achse, vorzugsweise längs mindestens zweier Achsen, insbesondere längs mindestens dreier Achsen, relativ zu dem Grundkörper (102) verschiebbar ist.

26. Bearbeitungsvorrichtung nach einem der Ansprüche 1 bis 25, **dadurch gekennzeichnet, dass** die Bearbeitungsvorrichtung (100) einen Grundkörper (102) umfasst und dass die Bearbeitungseinheit (140) um mindestens eine Schwenkachse, vorzugsweise um mindestens zwei Schwenkachsen, relativ zu dem Grundkörper (102) verschwenkbar ist.

27. Bearbeitungsvorrichtung nach einem der Ansprüche 1 bis 26, **dadurch gekennzeichnet, dass** die Bearbeitungsvorrichtung (100) einen Knickarmroboter (232) umfasst.

28. Bearbeitungsvorrichtung nach einem der Ansprüche 1 bis 27, **dadurch gekennzeichnet, dass** die Bearbeitungsvorrichtung (100) einen Portalroboter (125) umfasst.

29. Bearbeitungsvorrichtung nach einem der Ansprüche 1 bis 28, **dadurch gekennzeichnet, dass** die Bearbeitungseinheit (140) ein Bohrgerät umfasst.

30. Bearbeitungsvorrichtung nach einem der Ansprüche 1 bis 29, **dadurch gekennzeichnet, dass** die Bearbeitungseinheit (140) ein Nietgerät umfasst.
